# EUROPEAN PATENT SPECIFICATION

(11) **EP 2 008 725 B1**
(45) Date of publication and mention of the grant of the patent: **28.11.2012**
(21) Application number: 07741849.9
(22) Date of filing: 18.04.2007
(51) Int. Cl.: B05D 7/14, B05D 3/10, B24D 3/06, C09D 5/10, C09D 7/12, C09D 201/00, C23F 11/00

(54) **METHOD OF HIGHLY DURABLE REPAIR COATING**
VEFAHREN FÜR HOCHBESTÄNDIGE REPARATURBESCHICHTUNG
PROCÉDÉ DE FORMATION D'UN REVÊTEMENT DE RÉPARATION EXTRÊMEMENT RÉSISTANT

(30) Priority: 18.04.2006 JP 2006114823
(43) Date of publication of application: 31.12.2008
(73) Proprietor: Dai Nippon Toryo Co., Ltd., Osaka-City, Osaka 554-0012 (JP)
(72) Inventor: KIHIRA, Hiroshi, Futtsu-shi, Chiba 293-8511 (JP); AIGA, Takehide, Chiba 299-1141 (JP); IMAI, Atsumi, Chiba 299-1141 (JP); HIRAMATSU, Kanjiro, Chiba 299-1141 (JP); MITSUZUKA, Yoshihiko, Chiba 299-1141 (JP); NAGAI, Masanori, Otawara-shi, Tochigi 324-8516 (JP); SATO, Takayuki, Otawara-shi, Tochigi 324-8516 (JP); MATSUMOTO, Tsuyoshi, Otawara-shi, Tochigi 324-8516 (JP)
(74) Representative: Ziebig, Marlene
(86) International application number: PCT/JP2007/058413
(87) International publication number: WO 2007/123149

(56) References cited:
- JP-A- 2003 268 295
- JP-A- 2004 197 180
- US-A1- 2004 177 898

## Description

### Technical Field

The present invention relates to the maintenance and management of coated or coating-free steel structures and more specifically steel bridges, steel buildings, steel plants, and steel-made cargo machinery and tools and more particularly, to a processing method, which can ensure high duration of the repaired parts, while taking into consideration the achievement of high efficiency and the prevention of occurrence of any environmental pollution when practicing the repair-coating works or constructions for controlling or suppressing the deterioration of, for instance, such a structure due to the progress of corrosion thereof to thus substantially extend the service life of the same.

### Background Art

Methods and means for the corrosion preventive surface treatment of metals are known in the art. For instance US 2004/0177988A1 discloses a method for treating aluminium and aluminium or chromium alloys to provide an anticorrosive surface layer by contacting the surface with an aqueous solution containing a sulfate providing agent, such as sulfuric acid or alkali metal persulfate, an oxidizing agent for the sulfate providing agent, an alkali metal permanganate and an alkali metal carbonate.

But this method is not suited to treat steel structures.

As steel structures of coated or coating-free steel plates or sheets, there have already been established, for instance, steel bridges, steel buildings, steel plants, and steel-made cargo machinery and tools and they have been functioned as social and industrial infrastructures. To employ these steel structures over an extended period of time, it would be quite important to maintain and manage them for the protection of the same from any corrosion which would proceed with the elapse of time. At present, when practicing the repair-coating work of such a steel structure, the engineering method as disclosed in the non-patent document 1 has served as a guiding principle even in the fields other than that of the steel bridges. According to this engineering method, the coating systems used for the external planes of, for instance, a bridge over a railroad or roadway when newly constructing the same are defined while roughly dividing them into coating systems (a) used in the general environment; coating systems (b) used in a slightly severe environment; and coating systems (c) used in the quite severe environment in which the bridge is strongly exposed to the sea breezes and greatly influenced by the salts which come flying, while taking into consideration the corrosive environment of the place on which the bridge is to be constructed. Moreover, the recoating systems for the foregoing coating systems are defined to be recoating systems (a); recoating systems (b); and recoating systems (c), respectively. Further, there has likewise been disclosed, in the document, the specifications for the conditioning of the ground; the primary coating (or undercoating), the intermediate (middle) coating; and the top (finish) coating.

It is also disclosed in the document that, according to the prescription of the conditioning of the ground, the blasting method should be carried out so as to attain the surface condition corresponding to Sa2.5 prescribed in ISO8501-1 and the recoating system should be one capable of accomplishing the surface condition corresponding to the secondary to quaternary keren, but the tertiary keren (techniques using both the power-driven and manually driven machinery and tools) has been adopted in most of cases since the primary keren (blasting technique) is the most excellent technique even in the recoating process and it would be quite difficult, in these techniques, to prevent any contamination of the surroundings and it costs a great deal. On the other hand, the non-patent document 2 states that the removal of thick rust from a corrosion-resistant low-alloy steel using a combination of power-driven tools is judged to be insufficient as a surface prearrangement for coating and that it is common to remove such a thick rust observed when the corrosion severely proceeds while using the blasting method. Although it would be recognized that the blasting method is the most excellent technique for carrying out the highly durable repair- coating, but the blasting method suffers from various problems such that it may have an influence on the surrounding environment due to the generation of a tremendous noise and great deal of dust and that it may greatly pollute the surrounding environment because of, for instance, the post-treatment of industrial waste such as used grits.

When the plane to be repair-coated contains much salt adhered thereto, the salt should first be removed prior to the practical repair-coating operation. In most of cases, the acceptable amount of the adhered salt is specified to be not more than 100mg-NaCl/m². The amount thereof is determined using, for instance, a chloride ion-detection tube and accordingly, if the adhered amount of the salt exceeds the foregoing maximum permissible limit, the former should be removed through, for instance, washing with water. However, the water used for the washing cannot be discarded to the surrounding environment and accordingly, this technique suffers from additional problems such that great expense is required for carrying out a method for completely preventing any leakage of the waste liquid or to recover the same and then subject it to a separate waste-treatment.

In respect of the step subsequent to the ground-conditioning step and the adhered salt-removing step, the coating using the coating system (c) is, at present, considered to be one having the specification capable of withstanding the most severe corrosive environment, but there has been desired for the development of an engineering method which can ensure the duration identical to or higher than that achieved by the use of the coating system (c) in order to extend or elongate the period of the repair-coating operations as a means for improving the efficiency of the maintenance and management of a steel structure. The details of the coating system (c-1), as a typical example of the coating system (c), are as follows: after the ground is conditioned and, if desired, washed with water, the following 5 coating operations in all are carried out: an organic zinc-rich primer is applied (300 mg/m²); a primary coating of a modified epoxy resin-containing coating is applied twice (240 mg/m²); an intermediate coating of a polyurethane resin-containing coating is applied (140 mg/m²); and a top coating of a polyurethane resin-containing coating is applied (120 mg/m²). This method is thus quite expensive. The patent document 1 discloses a paint composition which permits the formation of a coated layer having a thickness of 100µm (as determined after drying) by a single brushing step to thus save the cost required for the repair-coating operation and to thereby reduce the number of coating operations. However, there has not yet been proposed any coating method capable of realizing the durability of the resulting coating identical to or superior to that accomplished by the coating system (c) as the guiding principle for the maintenance and management of the steel structure.

As has been described above in detail, to solve the problems associated with the maintenance and management of the steel structure, it would be insufficient to practice the conditioning of the ground, the removal of the adhered salt through washing with water and the coating with the coating system (c) according to the blasting technique as the existing technique.

Non-Patent Document 1: Edited by Incorporated Body: Japan Road Association, Handbook of Steel Road Edge-Coating, published by Maruzen Publishing Co., Ltd. Published on 1990. 6. 10

Non-Patent Document 2: edited by MIKI, Chihiro and ICHIKAWA, Atsushi, "The Current Bridge Engineering: the Forefront of the Engineering of Coating-Free Bridges and Steels", Published by RISU KOGAKU Publishing Company, 2004. 12. 25
Patent Document 1: JP-A-2001-131468;

### Disclosure of the Invention

### Problems That the Invention is to Solve

Accordingly, it is an object of the present invention to provide an engineering and processing method for repairing and coating a coated or coating-free steel structure to maintain and manage the same and to thus control the progress of the corrosion thereof. The method can efficiently and effectively ensure the high duration of the repaired parts, while taking into consideration the foregoing problems associated with the conventional techniques.

### Means for Solving the Problems

Accordingly, the present invention has been developed to solve the foregoing problems and the gist thereof is as follows:
(1) A method for highly durable repair-coating of a coated or coating-free steel structure, comprising the steps of:
   A. conditioning the ground of the coated or coating-free steel structure to such an extent that the rate of exposed surface area of the ground is not less than 60%; and
   B. applying an aqueous solution of sodium carbonate having a concentration of not less than 5 g/L and not more than 500 g/L, as a prior or preliminary processing solution.
(2) The method as set forth in the foregoing item (1), wherein the ground-conditioning operation in the step A is carried out using a rotary grinding tool which consists of a metallic rotating panel comprising a central fixing member for fitting the same to the rotating shaft of a rotary driving system and a grinding plane composed of a grinding plane and a grinding peripheral plane, wherein a part or the whole surface of the metallic rotating panel is provided with hard particles having a Mohs hardness of higher than 9 brazed thereto in a surface density of not less than 20 particles/cm², wherein assuming that the height and diameter of each projected portion formed from the hard particle and the brazing material are defined as H and D, respectively, the average H is not less than 300µm and the average ratio: H/D is not less than 0.3, and wherein when calculating the rate of exposed area of the hard particles projected and exposed through the surface of the brazing material, while using a virtual circle circumscribing the hard particles of the projections, the average rate of exposed area is not less than 10%.
(3) The method as set forth in the foregoing item (1) or (2), wherein it further comprises the step C of applying a highly corrosion-resistant zinc powder-containing paint composition which comprises (A) 100 parts by mass of a binder resin (the solid content by mass); (B) 200 to 800 parts by mass of zinc powder; (C) 1 to 95 parts by mass of a corrosive ion-fixing agent; and (D) 200 to 1,000 parts by mass of a solvent, after the completion of the foregoing step B.
(4) The method as set forth in any one of the foregoing items (1) to (3), wherein at least one coated layer is applied to the surface of the steel structure after the completion of the foregoing step B or C.
(5) The method as set forth in the foregoing item (3), wherein the component (A) is an inorganic resin or an organic resin.
(6) The method as set forth in the foregoing item (5), wherein the inorganic resin as the component (A) is an aqueous dispersion of a partial hydrolyzate of an alkyl silicate or a water-soluble silicate represented by the general formula: R₂O · nSi02 (in the formula, R represents an alkali metal and n is a positive number ranging from 1.0 to 4.5) and colloidal silica.
(7) The method as set forth in the foregoing item (5), wherein the organic resin as the component (A) is a member selected from the group consisting of epoxy resins, acrylic resins and urethane resins.
(8) The method as set forth in the foregoing item (3), wherein the component (C) is hydrocalumite or hydrotalcite.
(9) The method as set forth in the foregoing item (3), wherein the highly corrosion-resistant zinc powder-containing paint composition further comprises (E) a coupling agent.

### Effects of the Invention

In most of cases, the ground-conditioning step has conventionally been carried out using a power-driven tool, but most of the resulting ground-conditioned articles have still been insufficient in their quality and, in particular, the blasting technique is the only effective means for removing firmly adhered rust on advanced corrosion surfaces and on corrosion-resistant low alloy steel such as atmospheric corrosion- resistant steel. However, the blasting technique suffers from a variety of problems in that it requires an expensive cost for the protection and/or the temporary construction of the scaffold in order to prevent the scattering of any grits for the purpose of preventing the occurrence of any pollution of the surrounding environment, that it may generate a large amount of dust and a tremendous noise, and that the used grits should be post-treated and accordingly, it would be very seldom that the foregoing technique is continuously adopted from now on.

According to the present invention, in the repair-coating of a steel structure of a coated or coating-free steel plate or sheet, the conditioning of the ground does not require the use of any blasting technique and the present invention can eliminate the use of any step of washing with water which is required when the amount of the adhered salt exceeds the maximum permissible limit. The present invention thus permits the efficient and high quality ground-conditioning treatment without using any blasting technique which is insufficient in the both cost and prevention of any environmental pollution and the corrosive substances such as chloride ions remaining on the surface of the ground after the conditioning treatment are not eliminated through washing with water, but are converted into harmless substances whose harmless conditions are further fixed. The present invention can thus provide a highly durable repair-coating method which can significantly reduce the cost required for the coating and can reduce the occurrence of any environmental pollution. In addition, the present invention permits the substantial extension of the service life of steel structures easily, simply and certainly, as compared with the conventional techniques.

### Best Mode for Carrying Out the Invention

The present invention will be explained in detail below.

As has been described above in the foregoing item (1), the highly durable repair-coating method according to the present invention comprises a step A of conditioning the surface of a steel material of a steel structure as a subject to be treated, for repairing or repair-coating, according to the surface preparation such as grinding, polishing or shot-blasting technique to such an extent that the rate of exposed surface area of the ground is not less than 60%; and a subsequent step B of applying an aqueous solution of sodium carbonate having a predetermined concentration.

In the (ground) surface preparation treatment in the step A, the method used for this purpose is not restricted to any specific one, but suitably used herein include any conventionally known one such as the shot-blasting technique and those which make use of a tool such as a grinder or a disc grinder, which comprises, for instance, a rotary grindstone or a grinding disc fitted to an electrically powered rotary driving system. The present invention makes use of these means to thus grind the surface of a subject to be treated to such an extent that the rate of exposed surface area ([exposed surface area of the subject to be processed]/[total surface area of the subject to be processed]) of the ground is not less than 60%. This is because, if the rate of exposed surface area is less than 60%, a large number of corrosion-susceptible points may remain on the surface of a subject to be treated in a high probability, the rust would again grow in case where the subject is not subjected to a coating, but simply subjected to a repairing treatment according to the engineering method of the present invention, and the surface of the subject is insufficient in the adhesion to a layer of a paint even when the surface is subjected to a paint-coating treatment after the repairing treatment according to the present invention. Thus, in any case, the steel structure should again be repaired within a short period of time. For this reason, the rate of exposed surface area of the ground should be set at a level of not less than 60%. It is suitable in the present invention that the rate of exposed surface area of the ground is preferably set at a level of not less than 70%. The upper limit thereof is ideally 100%.

After the completion of this step A, the subject to be treated is then subjected to a step B of applying an aqueous solution containing sodium carbonate as a prior or preliminary processing solution. This prior processing solution permits the conversion of any corrosive substance into harmless materials, the detection of corrosion-susceptible (or active) sites present on the subject to be treated and it can detect or recognize the dried condition of the surface.

The prior processing solution will now be described in more detail below.

The step of treating the surface of a ground with a prior processing solution has never been used conventionally in the repairing or repair-coating treatment of a steel structure and this step is carried out for converting, into harmless substances, corrosive substances adhered to the exposed surface of the ground typical of corrosive ions such as Cl⁻ and SO⁴⁻ ions originated from the adhered salt and for ensuring the desired degree of dryness of the surface, which is required for the subsequent coating processes including the application of a primer coating. The exposed surface of a ground is quite susceptible to corrosion if it is left as it is without any maintenance and management and the steel structure would suffer from recurrent rust-generation if corrosive substances such as Cl⁻ and SO⁴⁻ ions coexist with the steel structure. Among the corrosive substances, Cl⁻ ions are derived from the salt components adhered to the structure and the step for washing the same with water included in the conventional technique is to remove such adhered salt.

To confirm the temporary anti-corrosive effect of an alkaline aqueous solution, the inventors of this invention sprayed a steel plate with a 5% aqueous salt solution, four times, at a frequency of once a week to thus give a specimen of a corroded steel plate, the specimen was then subjected to a surface preparation treatment to such an extent corresponding to St3, the following different kinds of alkaline aqueous solutions (a) to (c) were applied onto the surface of the respective specimens and then the specimens were allowed to stand overnight within a room and each specimen was inspected for the conditions of rust-generation. Consequently, the following results were obtained:
(a) Application of an aqueous solution of sodium carbonate (concentration: 100g/L) (pH 11.7): No rust-generation was observed;
(b) Application of aqueous ammonia (concentration: 600mg/L) (pH 11.4): There were observed spots of rust in a density of about 1% (by area); and
(c) Application of an aqueous solution of sodium thiosulfate (concentration: 4g/L) (pH 8.6): There were observed spots of rust in a density of about 3% (by area).

The foregoing results clearly indicate that the alkaline aqueous solution having a pH value of less than 9 never shows any desired temporary anti-corrosive effect; that such a temporary anti-corrosive effect is observed at a pH value of not more than 12; and that a 100g/L aqueous solution of sodium carbonate showed the most excellent temporary anti-corrosive effect among the alkaline aqueous solutions examined. The inventors of this invention have conducted further investigations of the concentration of sodium carbonate present in the prior processing solution, while taking into consideration the foregoing results. As a result, spots of rust were observed when a 5g/L aqueous sodium carbonate solution was applied and then allowed to stand overnight, while there was not observed the formation of any spot-like rust when using an aqueous sodium carbonate solution having a concentration of not less than 5g/L. Separately, when determining the time required for the generation of such spotted rust, it was found that the higher the concentration of sodium carbonate solution used, the longer the term required for the generation of spot-like rust. More specifically, there was observed the formation of spot-like rust after 2 days from the application of the prior processing solution for the concentration of 5g/L, while the formation of spot-like rust was observed after 40 days from the application of the prior processing solution for the concentration of 100g/L and the period of time required for the generation of spot-like rust was found to be almost proportional to the concentration of the aqueous sodium carbonate solution between these two cases. There was observed another proportional relation within the concentration range of higher than 100g/L and not more than 500g/L, different from the foregoing proportional relation observed for the concentration ranging from 5 to 100g/L and the generation of spot-like rust was observed after 60 days from the application of the aqueous sodium carbonate solution having a concentration of 500g/L. The inventors of this invention have determined the concentration of the prior processing solution required for the conversion of any corrosive substance into harmless one, and the termination or inhibition of the rust-generation, on the basis of the foregoing facts.

Specifically, the prior processing solution used herein is an aqueous sodium carbonate solution having a concentration of not less than 5g/L and not more than 500g/L. The solution is a liquid completely harmless to the human body and the surrounding environment and having a high pH value ranging from 9 to 12. Accordingly, the prior processing solution certainly penetrates into the remaining adhered rust to thus passivate the rust/steel interface and to thereby terminate or control the generation of rust. The prior processing solution can exchange the chloride ions taken into the adhered rust through the surface-chemical action of the corrosive substance with carbonate ions so that the chloride components are thus released from the corroded surface of the steel structure. When the surface of a steel material whose rate of exposed surface area is not less than 60% is obtained, the corrosive action of chloride ions as corrosive substances can be made harmless by the application of a 100g/L aqueous sodium carbonate solution as a prior processing solution, even when there was detected salt adhered to the surface of the steel material in an amount of not less than 1,500mg/m².

If applying the prior processing solution, the remaining adhered rust undergoes a color change to a dark brown color and the steel structure never causes any recurrent rust-generation even when moisture is adhered to the affected sites. This means that the corrosion-susceptible points are diminished. In this respect, however, a steel structure to be processed which has a surface whose rate of exposed surface area is not less than 60% or which often undergoes the formation of deep adhered or fixed rust may suffer from the problem of the recurrent rust-generation, even when the surface is treated with a prior processing solution. This would indicate that there still remain corrosion-susceptible points on the surface which has been treated according to the foregoing steps A and B and therefore, it has been found that the prior processing solution may serve as a detector for the confirmation of the presence of any corrosion-susceptible point. In case where the recurrent rust- generation is still observed even after the application of a prior processing solution, the related portion is again subjected to the treatment specified in the step A, then likewise subjected to the treatment specified in the step B followed by the confirmation of the complete elimination of such corrosion-susceptible points.

Since the prior processing solution is an aqueous solution, powdery sodium carbonate is accordingly separated out from the solution as crystals, if the solvent or water present in the solution is removed through the evaporation. This indicates that the surface of the base material has completely been dried prior to the initiation of the step C. Thus, the inventors of this invention have likewise found that this prior processing solution also serves as an indicator for the degree of the surface dryness of the steel structure. The engineering method which makes use of such a prior processing solution permits the monitoring of the conditions of the steel surface to be repair-coated and the quality confirmation of the surface processed according to the surface preparation treatment, which is most important in the repair-coating operation and such a technique has never been proposed. When practicing the coating, the powder separated out is removed using, for instance, a nylon cup-shaped wire brush fixed to an electrically powered rotary tool prior to the subsequent coating step. In this respect, if simultaneously using an apparatus such as a vacuum cleaner for the aspiration of powder separated out from the solution, any scattering of the powder or the dried sodium carbonate crystals in the surrounding environment can certainly be prevented almost completely. Thus, the method of the present invention can eliminate the use of the step for washing the steel material with water, which has conventionally been used for the removal of the salt component. This in turn permits the elimination of the facilities required for the supply of water to a desired actual place where the repair- coating operation is carried out and the method of the invention likewise permits the saving of the time required for the treatment of the waste water.

As has been described above, in the highly durable repair-coating method according to the present invention, the means for the surface preparation treatment used for establishing a desired rate of exposed surface area on the order of not less than 60% is not restricted to any specific one and the step can be practiced according to any known method such as the shot blasting technique or a method which makes use of currently used grinding tools such as a rotary grinding tool equipped with grindstone or a disc grinder equipped with grinding disc. However, it is preferred that a favorable rotary grinding tool is used, as already described in the foregoing item (2) according to the present invention, that the rotary grinding tool is fitted to the rotary driving system of, for instance, a disc grinder to thus grind the surface of the subject to be processed and to thereby carry out the desired surface preparation of the same.

This rotary grinding tool is one which consists of a metallic rotating panel comprising a central fixing member for fitting the same to the rotating shaft of a rotary driving system and a grinding plane composed of a grinding plane and a grinding peripheral plane, wherein a part or the whole surface of the metallic rotating panel is provided with hard particles having a Mohs hardness of higher than 9 brazed thereto in a surface density of not less than 20/cm², wherein when the height and diameter of each projected portion formed from the hard particle and the brazing material are assumed to be H and D, respectively, the average H is not less than 300µm and the average ratio: H/D is not less than 0.3, and wherein the hard particles on the projected portions have exposed surface area projected through the surface of the brazing material, which corresponds to not less than 10% of the surface area of a virtual circle (sphere) circumscribing the hard particles of the projected portions. The rotary grinding tool will be described below in more detail.

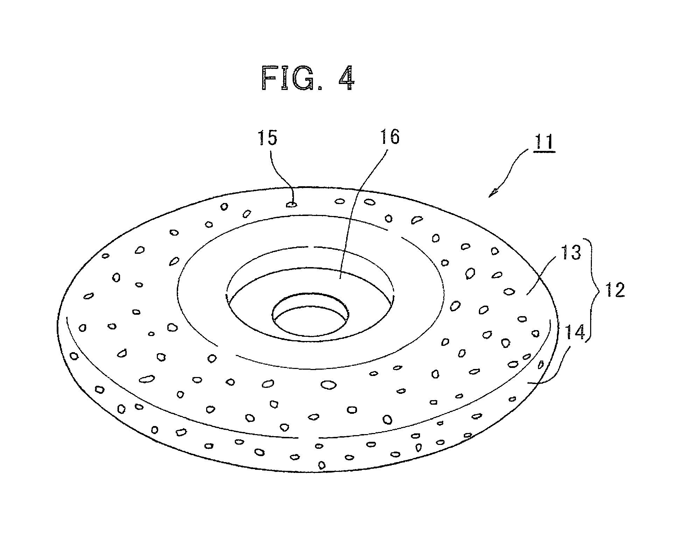

Fig. 4 is a perspective view of an embodiment of such a rotary grinding tool used in the surface preparation according to the present invention. The rotary grinding tool 11 comprises a metallic rotating panel, which panel comprises a grinding plane 12 composed of a grinding plate surface 13 carrying projected portions formed on the surface of the metallic rotating panel and a grinding peripheral plane 13; and a fixing member 16 arranged at the center of the metallic rotating panel. The fixing member 16 is to be engaged with the rotary shaft of a rotary driving system (not shown) of the grinding tool.

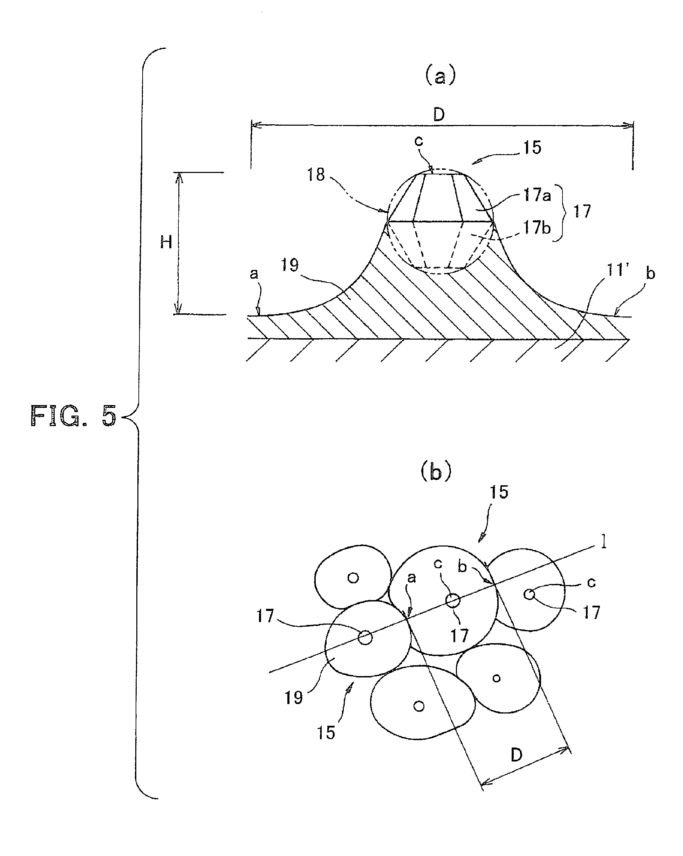

Fig. 5 is a schematic diagram for showing the construction of the projected portions of the rotary grinding tool as depicted in Fig. 4, wherein Fig. 5(a) is a cross sectional view thereof, while Fig. 5(b) is a plan view thereof. The projected portions 15 are formed by connecting hard particles 17 having a Mohs hardness of 9 or higher to the surface of the metallic rotating panel 11' serving as a substrate with the use of a brazing or soldering material 19.

In respect of these projected portions, a part 17a of each hard particle 17 is exposed to the air or projected through the surface of the brazing material 19 and the balance 17b thereof is embedded in and connected to the brazing material. The virtual circle 18 circumscribing the hard particles of the projected portions is used for calculating the percentage of the exposed area of the hard particles 17 (rate of exposed area), as will be described in detail later and accordingly, it is a spherical body which is supposed to circumscribe the hard particles and to be brought into contact with at least one projected portion (edge portion) of the hard particle and preferably at least three projected portions thereof.

The shape of the projected portion 15 can be determined by observing, by a microscope, the cut surface thereof in the direction of the shaft of the rotary grinding tool; non-destructive measurement using a probe-type surface-shape measuring machine; the electron beam-measurement using a 3-dimensional SEM; and the optical measurement using, for instance, a laser microscope provided with a function of 3-dimensional measurement. Thus, the diameter D and height H of the foregoing projected portion 15 can be determined on the basis of the shape thereof thus determined.

More specifically, as shown in Figs. 5(a) and (b), the diameter D of the specific projected portion is herein defined as the length of the line segment extending from the bottoms a and b positioned at the concave portions observed on a curve representing the contour of the cross section taken along the line 1 which passes through the vertex of the projected portion 15 to be measured and likewise passes through at least two of the neighboring projected portions. In this respect, it is also possible to define the diameter of the specific projected portion as an average of at least two measured values determined on the basis of at least two different line segments. On the other hand, the height H of the specific projected portion is herein defined as the vertical length of the line segment extending from the lower points a and b, positioned at the concave portions observed on the curve representing the contour of the cross section taken along the line 1, to the vertex c of the projected portion. In this connection, it is also possible to define the height of the specific projected portion as an average of at least two measured valued determined on the basis of at least two different line segments.

The average height H and the average ratio: H/D which can specify the shape of the projected portion are preferably determined by measuring diameters D and heights H of projected portions according to the foregoing methods, respectively for the projected portions included in 4 arbitrary regions each having a size of 5mm × 5mm (0.25cm²) on the grinding plane, the average values thereof (average D and average H) are then determined using these measured values and further the average ratio: H/D is calculated on the basis of these average values.

Moreover, the rate of exposed area of the specific hard particle 17 at the projected portion 15 can likewise be determined by the observation of the projected portion using a microscope or a magnifying glass to thus determine the rate of the exposed area of the hard particle with respect to the diameter of the hard particle and by the subsequent calculation of the surface area of the virtual circle approximately circumscribing the corresponding hard particle through the numerical integration.

Incidentally, when hard particles each having a Mohs hardness of higher than 9 are present on a part or the whole surface of the metallic rotating panel which serves as a grinding plane of the foregoing rotary grinding tool used in the present invention in a surface density of less than 20 projections/cm², a part or the whole of the hard particles may be removed from the surface of the metallic rotating panel during the grinding operations and accordingly, the rotary grinding tool cannot be used over a desired long period of time. This would in turn reduce the working efficiency when processing a steel material or structure having a large surface area and therefore, the surface density of the hard particles is set at a level of not less than 20 projections/cm². Preferably, the hard particles are brazed to the surface of the metallic rotating panel in a surface density of not less than 30 projections/cm², and in this case, the working efficiency of a steel material or structure having a large surface area can considerably be improved. On the other hand, it would be quite expensive to increase the surface density of the hard particles up to a level of not less than 60 projections/cm² and it would be difficult or rather impossible to increase the surface density of the hard particles to a level of not less than 100 projections/cm² from the viewpoint of the spatial limitation. Accordingly, the surface density of the hard particles most suitably ranges from about 30 projections/cm² to about 60 projections/cm².

This surface density of the hard particles can be obtained by the determination of the number of projected portions present in an arbitrarily selected area on the surface of the metallic rotating panel having a size of 10mm × 10mm.

In addition, when the average height H of the projected portion 15 is less than 300µm, the rotary grinding tool causes clogging due to the powdery iron oxide generated during the operation and this would in turn reduce the working efficiency. When the average height H thereof is not less than 300µm, there is a tendency that the grinding tool is free of any clogging and when it is not less than 400 µ m, any maintenance of a tool as a measure for preventing such clogging can be eliminated. It is suitable to set the upper limit thereof at a level of about 1500 µ m.

When the average ratio: H/D of the projected portion 15 is less than 0.3, the resulting grinding tool is insufficient in the digging into the rust and this in turn impairs the grinding efficiency. Accordingly, the average ratio: H/D should be set at a level of not less than 0.3. When the grinding tool is so designed that it has a shape whose average ratio: H/D is not less than 0.5, the resulting grinding tool can further efficiently remove the thick rust and fixed rust. When the average ratio: H/D exceeds 0.8, however, the structural strength of the tool at the projected portions is reduced and the projected portions are liable to come off due to the impact during the grinding operations. For this reason, the average ratio: H/D is preferably set at a level ranging from 0.3 to 0.8.

With respect to the projected portion 15 of the rotary grinding tool, if the whole surface of the brazed hard particles 17 having a Mohs hardness of higher than 9 is covered with the brazing material 19, the grinding operation with the resulting tool results in the simple polishing of the hard surface of fixed rust with a soft brazing material and accordingly, this would interfere with the removal of the fixed rust. For this reason, the grinding tool is so designed that the exposed area of the hard particles projected through the surface of the brazing material is not less than 10% of the surface area of a virtual circle 18 circumscribing the hard particles of the projections. The use of the virtual circle would make, quite simple, the calculation of the rate of the exposed area of the hard particles. The higher the rate of the exposed area, the higher the ability of the grinding tool to scrape away the fixed rust, but the contact boundary between the hard particles and the brazing materials is reduced in proportion to the increase of the rate of the exposed area, this accordingly leads to the easy removal of the hard particles and the service life of the resulting grinding tool would correspondingly be reduced. In this respect, it is necessary to set the rate of the exposed area of the hard particles having a Mohs hardness of higher than 9 at a level of not less than 10%, on the average, of the whole surface thereof (the surface area of the virtual circle) and further it is desirable that the rate of the exposed area thereof is set at a level of not less than 30% on the average. On the other hand, if the rate is set at a level of not less than 70% on the average, the joining strength established between them is reduced and this results in the reduction of the working efficiency. The optimum average rate of the exposed area ranges from about 30% to about 50%.

The average rate of the exposed area of the hard particles at the projected portions is herein defined to be one obtained by determining the rates of the exposed areas for not less than 20 projected portions arbitrarily selected and present in a unit area of 10mm × 10mm (1cm²) on the grinding plane, according to the method described above and then calculating the average thereof.

The reason why using hard particles having a Mohs hardness of higher than 9 as the hard particles for forming the projected portions is that the Mohs hardness of the fixed rust exceeds 9, the abrasive is ground away by the fixed rust, when using corundum or alumina having a Mohs hardness of 9 and this accordingly, makes the removal of the fixed rust quite difficult.

The hard particles constituting the projected portions are not restricted to particular ones inasmuch as they have a Mohs hardness of higher than 9, but it is herein preferred to use diamond particles and cubic boron nitride particles whose average particle size is not less than 200 µ m and not more than 1,000µm, while taking into consideration the effective removal of the fixed rust. In this respect, if the average particle size of the hard particles is less than 200µm, the resulting grinding tool undergoes clogging and this leads to a considerable reduction of the grinding ability thereof. On the other hand, if the average particle size of the hard particles exceeds 1,000 µm, the surface density of the projected portions on the grinding tool is substantially reduced and this results in the reduction of the service properties thereof over a long period of time. The average particle size of the hard particles further preferably ranges from 300µm to 750µm and accordingly, it would be most efficient to produce the grinding tool while using industrial diamond particles and cubic boron nitride particles whose average particle size distribution falls within the range of from 500µm to 600 µm, from the viewpoint of the production of the grinding tool.

The joining material used for forming the projected portions 15 is selected from those having a sufficient ability to bind to both the hard particles and metallic rotary panel as the base material. Accordingly, the basic component system for the joining material can be selected from, for instance, nickel-containing brazing agents, brass- containing brazing agents, aluminum alloy-containing brazing agents and solder. For instance, nickel-based brazing agents (such as BNi-1, BNi-2, BNi-5 and BNi-7) are often employed as such a joining agent, while taking into consideration the melting points thereof. To improve the ability to bind to the hard particles such as diamond particles and cubic boron nitride particles, it is preferred to use a brazing agent containing at least one member selected from the group consisting of titanium, chromium and zirconium in an amount of not less than 0.5% by mass.

Moreover, when using, as the brazing material, one containing at least one of titanium, chromium and zirconium in an amount of not less than 0.5% by mass and a stainless steel material as the ingredient of the metallic rotary panel, a metallurgical reaction takes place at each boundary formed between the hard particles or the metallic rotary panel and the brazing material to thus form intermediate layers between them to thereby improve the binding strength established between the hard particles and the metallic rotary panel. In this respect, such a combination of the foregoing materials is quite effective to ensure a shear strength of not less than 20N/hard particle for the hard particles having a Mohs hardness of 9 or higher as will be detailed below.

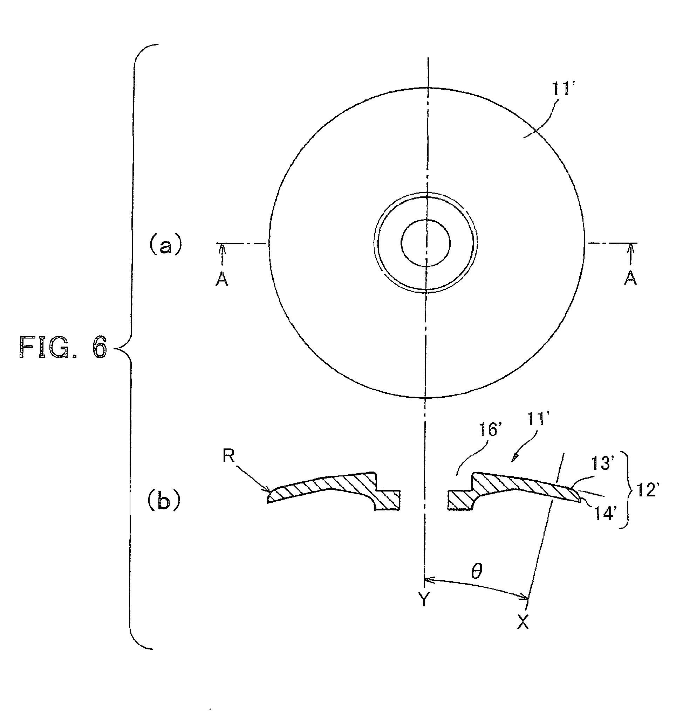

Fig. 6 is a diagram showing the shape of the metallic rotary panel serving as a base plate of the rotary grinding tool as shown in Fig. 4, wherein Fig. 6(a) is a plan view thereof and Fig. 6(b) is a cross sectional view thereof taken along the line A-A in Fig. 6(a). The rotary grinding tool 11 used in the present invention comprises projected portions 15 which are formed on the surface of the grinding parts 12' serving as the grinding plane of the metallic rotary panel 11' as the basic plate and which consists of hard particles each having a Mohs hardness of higher than 9 and the brazing material 19. The metallic rotary panel will hereunder be described in more detail.

As shown in Fig. 6, the metallic rotary panel 11' of the rotary grinding tool 11 is a disc having grinding plane 12', which comprises a grinding panel plane 13' and grinding peripheral plane 14' and it is provided with, at the central portion thereof, a fixing part 16' for fitting the same to the rotating shaft (not shown) of a driving system capable of putting the disc, as a part of the rotary grinding tool, into rotational motions. Thus, Fig. 6 shows the metallic rotary panel as the basic material for the grinding tool 11 and it is herein described using the reference numerals 11' to 15' which correspond to the reference numerals 11 to 15 attached to the grinding tool.

In this respect, the grinding plane is herein simply conveniently divided into the grinding panel plane 13' and the grinding peripheral plane 14' and it is sufficient that the region extending 10 to 15mm from the peripheral edge of the rotary grinding tool is defined to be the grinding peripheral plane and the remaining grinding plane is defined to be the grinding panel plane.

In respect of the grinding plane 12' constituted by the grinding panel plane 13' and the grinding peripheral plane 14', the grinding panel plane 13' is so designed that it has a portion at which the line perpendicular to the grinding panel plane 13' and the central rotating axis thereof makes an angle θ of preferably not less than 1 degree and not more than 45 degrees as will be seen from Fig. 6. In other words, if the grinding panel plane 13' is simply so designed that the line perpendicular to the grinding panel plane 13' and the central rotating axis thereof makes an angle θ of 0 degree, the operator cannot hold the electrically powered tool while inclining the same with respect to the plane to be processed and this leads to the reduction of the working efficiency and an increase in the dangerousness of the working operation. On the other hand, when the grinding panel plane 13' is so designed that it only has planes each having an angle θ of higher than 45 degrees, the handling of the resulting disc grinder becomes very difficult and this accordingly results in the substantial reduction of the working efficiency and the safety. Moreover, the grinding peripheral plane 14' of the metallic rotary panel is preferably so designed that it includes a portion at which the radius R of curvature in the cross section parallel with the central rotating shaft is not less than 1mm and not more than 10mm. This is because when all of the radiuses R of curvature in the cross section parallel with the central rotating shaft of the grinding peripheral plane 14' are less than 1mm, a cut or groove is quite easily be made in deep or thick corroded sites, this leads to the reduction of the braking efficiency in the planar direction. On the contrary, when all of the radiuses R of curvature exceed 10mm, the efficiency of the operation cutting into thick corroded sites achieved by the use of the peripheral portion of the grinding tool is considerably reduced. The radius R of curvature effectively used herein ranges from R3 to R7mm.

The average shear strength of the hard particles used in the foregoing rotary grinding tool used in the present invention is preferably not less than 20N/particle.

This is because, when particles such as diamond particles having a Mohs hardness of 10 collide with the surface of a steel material to be ground, the diamond particles are broken due to the thermal fatigue thereof and this results in the complete removal of the hard particles (abrasive grains) from the grinding tool and accordingly, the service life of the resulting rotary grinding tool is substantially reduced when using the same in the grinding operations of the surface of steel materials. More specifically, if the average shear strength is set at a level of 20N/particle, the roots of the hard particles (diamond particles) still remain in the projected portions at the joined portions even when the hard particles undergo thermal fatigue and the grinding operations can thus be continued. More specifically, the shear strength is an indication for evaluating the bonding strength established between the hard particles and the brazing material present in the projected portions. The shear strength can be determined by holding, on a stage, a metallic rotary panel on which hard particles having a Mohs hardness of higher than 9 are brazed; supporting the exposed part of the hard particles using a claw-like hard metal tool connected to a load cell; and then applying a load to the stage from the lateral direction to thus determine the load observed when the hard particles are removed from the rotary panel. In this connection, an example of such a measuring device usable herein is Bonding Tester available from RESKA Company, and the use of such a device would permit the determination of the shear strength.

The average shear strength is herein defined to be one obtained by determining the shear strength values of the hard particles for not less than 20 projected portions arbitrarily selected and present in a unit area of 10mm × 10mm (1cm²) on the grinding plane, according to the method described above and then calculating the average thereof.

To realize such a high shear strength, it is preferred, as has been discussed above, to use a brazing material containing at least one member selected from the group consisting of titanium, chromium and zirconium in an amount of not less than 0.5% by mass. For instance, examples of such brazing materials preferably used herein include 70% by mass Ag/28% by mass Cu/2% by mass Ti alloy; 74% by mass Ni/14% by mass Cr/3% by mass B/4% by mass Si/4.3% by mass Fe/0.7% by mass C alloy; 83% by mass Ni/7% by mass Cr/3% by mass B/4% by mass Si/3% by mass Fe alloy; 71% by mass Ni/19% by mass Cr/10% by mass Si alloy; and 77% by mass Ni/10% by mass P/13% by mass Cr alloy.

In respect of the rotary grinding tool used in the engineering method according to the present invention, cuts or grooves extending towards the center of the metallic rotary panel may be axially symmetrically formed and arranged on the periphery of the panel to thus increase the impulsive force applied to the corroded sites. Alternatively, the diameter of the metallic rotary panel can be increased up to a level of not less than 50mm or the mass of the metallic rotary panel can be set at a level of not less than 160g to thus improve the working efficiency of the surface preparation treatment.

The rotary grinding tool used in the present invention can be prepared by, for instance, applying a powdery brazing material blended with an organic binder onto the grinding plane of the rotary grinding panel to such a thickness that it corresponds to 20 to 60% of the average particle size of the hard particles having a Mohs hardness of higher than 9; distributing, on the coated powdery brazing material, hard particles each having a Mohs hardness of higher than 9 in a desired surface density; and then allowing the resulting assembly to stand at a temperature of not less than 1,000°C and not more than 1,040°C and a reduced pressure of not more than 10⁻⁴ Torr for a time of not less than 10 minutes and not more than 50 minutes.

This rotary grinding tool would permit the completion of a series of operations starting from the removal of thick rust to the exposure of the steel surface at a stroke, the tool is characterized in that the resulting surface of the conditioned ground carries scratch marks on the processed and exposed area thereof due to the action of the rotating hard particles having a Mohs hardness of higher than 9 distributed on the grinding surface of the grinding tool and the resulting surface of the conditioned ground has excellent characteristic properties which have never been experienced conventionally. Accordingly, when adopting the plane processed using the rotary grinding tool as the substrate for repair-coating, it is preferred that the degree of such treatment and the resulting conditions are newly defined according to ISO8501-1 from the viewpoint of the construction management and that the surface preparation treatment is preferably carried out on the basis of the standard for surface preparation and management for carrying out the highly durable repair-coating as shown in Table 1 together with photographs of the standard. In other words, according to this standard procedures, the steel surface whose rate of exposed area of the ground is less than 60% and which carries the remaining scratch marks, is defined to be StD-1; the steel surface whose rate of exposed area of the ground is not less than 60% and less than 97% is defined to be StD-2; the steel surface whose rate of exposed area of the ground is not less than 97% is defined to be StD-3, respectively. The surface- conditioned ground plane processed according to the currently used blasting technique is in such a condition that it has innumerable recesses formed through the collision with grit particles or the so-called anchor pattern and such surface-roughness would help the adhesion of a paint to the ground surface. In the conventional blasting method, however, the ground surface is perpendicularly bombarded with hard powdery material and therefore, the fixed rust at the pitting-like portions and corrosive ions such as salt components are injected into the reverse side of the outer surface of the metallic ground.

For this reason, even if the apparently clean blast-treated surface is subjected to a coating treatment, the surface is kept in a wet condition due to, for instance, dew condensation and the surface again suffers from the generation of rust. Regarding the surface-conditioned ground plane which has been processed using the foregoing rotary grinding tool of the present invention, the ground (substrate) surface is ground by the hard particles firmly brazed to a metallic rotary panel in the horizontal direction. Accordingly, this technique is completely free of such a phenomenon that corrosive ions are injected into the reverse side of the outer surface of the metallic ground, innumerable scratch marks are formed on the surface and the effect of anchoring the coated film can be ensured like the ground surface processed according to the blasting method. Therefore, the ground surface realized by the treatment of the present invention is a freshly produced surface which is quite effective for simultaneously improving the adhesion to the subsequently applied coating film and increasing the anticorrosive and rust protective effect to the highest possible level. When using the foregoing tool, it would be sufficient to obtain the steel surface of not less than StD-2 and the rate of exposed surface area of the ground can certainly be set at a level of not less than 60% as specified in the step A of the foregoing item (1). It would further be effective from the viewpoint of the achievement of more excellent anticorrosive properties to obtain a steel surface of StD-3, but the degree of the surface-conditioning is preferably selected while taking into consideration the working efficiency and the execution cost. On the other hand, the ground surface of less than StD-2 has a large number of corroded sites whose depths are further quite high and accordingly, it would be quite difficult to make the corrosion-active points harmless even when applying, onto the surface, a prior processing solution such as that disclosed in the foregoing step B. In this case, the presence of such corrosion-active points can be detected by the application of the prior processing solution and accordingly, the only related parts thus detected are again subjected to the treatment as specified in the step A and then the treatment as specified in the step B to thus completely eliminate the corrosion-active points.

In the highly durable repair-coating method according to the present invention, the repairing operation may be finished by practicing the step B of the foregoing item (1), but it is preferred in the present invention to apply a primer coating layer onto the processed surface obtained after the completion of the step B, as an additional step C. The paints to be applied may appropriately be selected while taking into consideration the desired anticorrosive effect and usable herein include, for instance, currently used organic or inorganic type ones such as zinc powder-containing paint compositions (zinc-rich primer compositions).

However, it is preferred in the present invention to use highly anticorrosive zinc powder-containing paint compositions as will be detailed below:

In other words, the highly anticorrosive zinc powder-containing paint composition is preferably a paint composition comprising (A) 100 parts by mass (mass of the solid contents) of a binder resin; and, on the basis of the total mass of the binder resin, (B) 200 to 800 parts by mass of zinc powder; (C) 1 to 95 parts by mass of a corrosive ion-fixing agent; and (D) 200 to 1,000 parts by mass of a solvent.

The binder resin (A) may be an organic or inorganic one and it may likewise be a water-based or solvent-based one. The organic binder resin may be any commercially available resins and specific examples thereof are epoxy resins, modified epoxy resins, acrylic resins, and urethane resins. Particularly preferred are epoxy resins, acrylic resins, and urethane resins, which are excellent in the anticorrosive properties and the adhesion to the ground. Moreover, as the aqueous organic binder resins preferably used herein, there may be listed, for instance, those obtained by introducing hydrophilic functional groups such as -OH, -NH₂, and/or -COOH into, for instance, the resins listed above to thus make the resins dispersible or soluble in water.

As the inorganic binder resins usable herein as the component (A) may be, for instance, partial hydrolyzed condensates of alkyl silicates or modified derivatives thereof.

Examples thereof include hydrolyzed initial condensates of alkyl silicates obtained starting from, for instance, tetramethyl orthosilicate, tetraethyl orthosilicate, tetrapropyl orthosilicate, tetrabutyl orthosilicate, tetrapentyl orthosilicate, tetrahexyl orthosilicate, methyl trimethoxy-silane, methyl triethoxy-silane, methyl tripropoxy- silane, ethyl trimethoxy-silane, ethyl triethoxy-silane, butyl trimethoxy-silane, butyl triethoxy-silane, amyl triethoxy-silane, phenyl trimethoxy-silane, and phenyl triethoxy-silane. In this case, the degree of the hydrolysis preferably ranges from 50 to 98%. In addition, these hydrolyzates may likewise be derivatives thereof obtained by further reacting them with other organic compounds. These binder resins may be used alone or in any combination of at least two of them.

More specifically, favorably used herein include, for instance, Ethyl Silicate 40 (available from COLCOAT Corporation); Ethyl Silicate 40 (available from TAMA Chemical Industries, Ltd.); Silbond 40 (available from Stauffer Chemical Co.); and Ethyl Silicate 40 (available from Union Carbide Co.).

Moreover, examples of aqueous inorganic binder resins usable herein are binders comprising at least one member selected from the group consisting of aqueous dispersions of water-soluble silicates represented by the following general formula (I):

R₂O · nSiO₂ (I)

(In the formula, R represents an alkali metal; n is a positive number ranging from 1.0 to 4.5) and colloidal silica. In the foregoing general formula (I), the alkali metals represented by R suitably used herein include, for instance, lithium, sodium and potassium.

As the water-soluble silicates represented by the general formula (I), usable herein are wide variety of conventionally known ones.

In addition, the foregoing organic or inorganic binder resins may be used in the present invention alone or in any combination of at least two of them. Moreover, it is also possible to use various combinations of organic and inorganic binder resins or to use reaction products of organic binder resins and inorganic ones.

The zinc powder component (B) may be any conventionally known ones inasmuch as it can release zinc to thus ensure the desired sacrificial anodic effect.

Moreover, the particle size of the powdery zinc component used herein in general ranges from 1 to 100 µ m and the preferred particle size thereof falls within the range of from 3 to 7 µ m. The use of the powdery zinc component having a particle size falling within the range specified above, in particular, the foregoing preferred range permits the further improvement of the working properties of the resulting composition when coating the same and likewise the formation of a coated film having considerably uniform appearance.

In this respect, the particle size of the powdery zinc component is herein determined using a particle size distribution-measuring device (Model LA-910 available from HORIBA Mfg. Co., Ltd.).

The amount of the powdery zinc component to be incorporated into the paint according to the present invention preferably ranges from 250 to 700 parts by mass per 100 parts by mass of the solid content of the binder resin. When the content of the zinc powder is less than 200 parts by mass, the resulting paint composition is insufficient in the anticorrosive properties, while when it exceeds 800 parts by mass, the resulting paint composition is likewise insufficient in the physical properties and appearance of the coated layer formed therefrom. Furthermore, it would be difficult, for the binder resin, to ensure the formation of highly reliable linkage with the surface of the substrate and the resulting coated film is inferior in the adhesion.

Then the component (C) is a corrosive ion-fixing agent which can collect and react with corrosive ionic substances such as Cl⁻ and SO₄²⁻ present in the boundary between layers of rust and the iron ground to thus form water-insoluble double salts and to thereby fix and inactivate the corrosive ions. The use of such a fixing agent would permit the prevention of any reduction of the anticorrosive properties of the coated layer of the resulting paint composition since it can inactivate the corrosive ions even if they still remain on the surface of a steel material to be processed.

Typical examples of such corrosive ion-fixing agents are hydrocalumite and hydrotalcite.

The hydrocalumite is water-containing or hydrated crystalline powder having a layered structure and represented by the following formula:

3CaO · Al₂O₃ · CaX_{2/m} · nH₂O

(In the formula, X represents a monovalent or divalent anion, m represents the valency of the anion and n is a number of not more than 20). Typical examples of such anions (X) include NO₃⁻, NO₂⁻, OH⁻, CH₃COO⁻, and CO₃²⁻. These anions can undergo anion-exchange when they are brought into contact with chloride ions or sulfate ions, while releasing X such as NO₃⁻ and NO₂⁻, and fixing (supporting) the corrosive ionic substances within the hydrocalumite to thus inactivate the same. On the other hand, the foregoing released anions form a passive film on the surface of the steel material to be processed to thus further improve the anticorrosive properties of the resulting coating.

The hydrotalcite is typically a hydrated crystalline powder having a layered structure and represented by the following formula:

Mg_{4.5}Al₂(OH)₁₃CO₃ · nH₂O

(In the formula, n is a numerical value of not more than 4 and preferably 3.5) and it has, like the hydrocalumite, such an ability that it can undergo anion-exchange when it comes in close contact with corrosive ions to thus fix the corrosive ions within the structure thereof and that the fixed corrosive ions are never released from the crystalline structure.

The amount of the corrosive ion-fixing agent to be incorporated into the highly anticorrosive zinc powder-containing paint composition preferably ranges from 5 to 50 parts by mass per 100 parts by mass of the solid content of the binder resin. When the content thereof is less than 1 part by mass, the resulting paint composition cannot collect all of the corrosive ionic substances such as Cl⁻ and SO₄²⁻ present in the boundary between layers of rust and the iron ground and the composition is thus liable to be insufficient in the anticorrosive properties, while when it exceeds 95 parts by mass, the resulting coating layer suffers from the formation of blisters and the occurrence of exfoliation and the layer is insufficient in the anticorrosive properties.

The solvents (D) used in the highly durable zinc powder-containing paint composition may be any organic solvent or water insofar as it can dissolve or disperse the foregoing components (A) to (C).

Examples of such organic solvents usable herein include aromatic solvents such as toluene and xylene; alcoholic solvents such as ethanol, methanol and butanol; ketone type solvents such as methyl ethyl ketone, and methyl isobutyl ketone; ether type solvents such as propylene glycol monomethyl ether, and ethylene glycol monomethyl ether; and ester type solvents such as butyl acetate and ethyl acetate.

When a paint composition is an aqueous type one, the solvent used in the paint is water. In this case, a water-soluble organic solvent may likewise additionally be incorporated into the paint composition. Specific examples of the foregoing water-soluble organic solvents are methanol, ethanol, 1-propanol, 2-propanol, t-butyl alcohol, ethylene glycol, propylene glycol, 1,2-propane-diol, 1,3-propane-diol, glycerin, acetone, methyl cellosolve, ethyl cellosolve, butyl cellosolve, methyl carbitol, ethyl carbitol, propyl carbitol, butyl carbitol, and diacetone alcohol.

The amount of the solvent (D) to be incorporated into the paint composition preferably ranges from 200 to 600 parts by mass per 100 parts by mass of the binder resin (solid content). When the amount of the solvent to be incorporated is less than 100 parts by mass, the viscosity of the resulting paint becomes too high to ensure desired stability thereof and the easy handling ability thereof in the coating operations. On the other hand, when it exceeds 1,000 parts by mass, the viscosity of the resulting paint becomes too low to form a coating layer having a desired or prescribed thickness (not less than 50µm).

A coupling agent (E) may, if necessary, be incorporated into the highly anticorrosive zinc powder-containing paint composition. The coupling agent (E) can serve to improve the ability of the paint to wet or impregnate layers of rust present on steel materials and to likewise improve the adhesion of the resulting coating layer to the surface of the steel materials. Typical examples of such coupling agents usable herein include silane-containing coupling agents such as γ -glycidoxy-propyl trimethoxy-silane, γ -glycidoxy-propyl methyldiethoxy-silane, β -(3,4-epoxy-cyclohexyl) ethyl-trimethoxy-silane, vinyl triethoxy-silane, γ-methacryloxy trimethoxy-silane, and γ-mercapto- propyl trimethoxy-silane; titanium-containing coupling agents such as isopropyl tri-isostearoyl titanate, tetra-octyl-bis(di-dodecyl) phosphite titanate, isopropyl tri-octanoyl titanate, isopropyl tri-dodecyl benzene-sulfonyl titanate; and other coupling agents such as aluminum-containing coupling agents and zirconium- containing coupling agents.

The component (E) is incorporated into the paint composition for the improvement of the ability of the paint to wet layers of rust and penetrate into the same and for the improvement of the adhesion of the resulting coating layer to the surface of the steel materials and the component is incorporated into the composition in an amount ranging from 0 to 10 parts by mass and preferably 0.5 to 5 parts by mass. The use of the component (E) in an amount beyond the upper limit thereof specified above provides no further improvement of the foregoing effect and it would economically be unfavorable.

The zinc powder-containing paint according to the present invention comprises the foregoing components in the following relative amounts: 200 to 800 parts by mass of zinc powder (B); 1 to 95 parts by mass and preferably 5 to 50 parts by mass of a corrosive ion-fixing agent (C); 200 to 1,000 parts by mass of a solvent (D); and 0 to 10 parts by mass and preferably 0.5 to 5 parts by mass of a coupling agent (E), on the basis of 100 parts by mass (mass of the solid contents) of a binder resin (A).

A dispersant may be incorporated into the highly anticorrosive zinc powder-containing paint composition for the purpose of uniformly dispersing the zinc powder and the corrosive ion-fixing agent in the composition. Examples of such dispersants usable herein include cationic type ones such as quaternary ammonium salts; anionic type ones such as carboxylic acid salts, sulfonic acid salts, sulfuric acid ester salts, and phosphoric acid ester salts; and nonionic type ones such as ether type, ether-ester type, ester type and nitrogen atom-containing nonionic dispersants.

The zinc powder- containing paint composition may further comprise other additives such as an anti-sagging agent and a pigment. The anti-sagging agent is an additive for imparting a structural viscosity to the paint composition when incorporated into the same and for consequently imparting thixotropic properties thereto and examples thereof include amorphous silica, colloidal calcium carbonate, organic bentonite, hydrogenated castor oil, aliphatic amides, higher fatty acids, and micro-gel particles. These anti-sagging agents may be used alone or in any combination of at least two of them. Particularly preferably used herein are organic bentonite type ones since they can show an ability to establish a higher structural viscosity by the addition of only a small amount thereof to the composition.

Moreover, the pigments usable herein may be, for instance, body pigments, anticorrosive pigments, and colored pigments. Specific examples thereof include talc, mica, barium sulfate, clay, calcium carbonate, zinc oxide, titanium dioxide, red iron oxide, zinc phosphate, aluminum phosphate, barium metaborate, aluminum molybdate, and iron phosphate and these pigments may be used alone or in any combination of at least two of them.

The paint can be prepared according to the usual method. In this case, it is general that liquid components and powder components are blended immediately before the practical use of the same. The liquid components can be blended with the powdery components together to thus obtain a uniform dispersion through the use of any dispersion means commonly used in the preparation of a paint, for instance, mills using mediums such as a roll mill, a sand grind mill and a ball mill; and Disper Dispersing Device.

The zinc powder-containing paint is applied onto, for instance, a steel structure using a means such as an air spray, an airless spray, a roll coater or a brush, but it is in general applied by the use of a spray.

The paint applied onto a subject is dried at ordinary temperature over a time ranging from 18 to 48 hours or it is compulsorily dried at a temperature on the order of about 80°C for a time of not less than 30 minutes to thus evaporate off the solvent and to thereby give a desired coated film.

The hydrocalumite or hydrotalcite serving as a corrosive ion-fixing agent in the highly anticorrosive zinc powder-containing paint composition shows the effect of permanently fixing the remaining corrosive ions according to the following mechanism. The hydrocalumite or hydrotalcite is typically represented by the following formulas:

• Hydrocalumite → 3CaO • Al₂O • CaX_{2/m} • nH₂O

(In the formula, X represents a monovalent or divalent anion, m represents the valency of the anion and n is a number of not more than 20);

• Hydrotalcite → Mg_{4.5}Al₂(OH)₁₃CO₃ • nH₂O

(In the formula, n is a numerical value of not more than 4 and preferably 3.5).

The corrosive ion-fixing agent can undergo anion-exchange when they are brought into contact with corrosive ionic substances such as Cl⁻ and SO₄²⁻ ions, while releasing X such as NO₃⁻ and NO₂⁻, or CO₃²⁻ and fixing the corrosive ionic substances within the structure of hydrocalumite or hydrotalcite through the formation of water- insoluble double salts. Moreover, the paint composition of the present invention also contains zinc powder and accordingly, it would show the anticorrosive properties as a zinc powder-containing paint. In addition, the paint is one showing anticorrosive properties superior to those observed for the conventional organic zinc-rich primer because of the combination of the anticorrosive effect of the zinc component and the foregoing corrosive ion-fixing function. Accordingly, the use of the highly anticorrosive zinc powder-containing paint composition would permit the formation of the repaired and coated plane or surface which has anticorrosive properties superior to those observed for the conventional organic zinc-rich primer while permanently fixing the corrosive ions possibly present in the corroded sites which cannot completely be removed from the ground surface during the surface-conditioning step. In this connection, when applying the highly anticorrosive zinc powder-containing paint composition to the processed plane obtained after the completion of the foregoing step B as a primer layer, the primer is simply applied to or put on the sodium carbonate powder precipitated from a very small amount of the prior processing solution remaining on the plane through the drying of the same. However, the inventors of this invention have found that the ion-fixing agent included in the primer layer likewise shows an effect of fixing sodium carbonate. Accordingly, when applying the paint composition, it is thus desirable to apply the composition while mixing, with the paint composition, the sodium carbonate powder precipitated from the prior processing solution through drying using a brush or a roller in order to secure the sufficient adhesiveness.

In the highly durable repair-coating method according to the present invention, it is preferred to further apply at least one layer to the subject to be processed after the completion of the step B as set forth in the foregoing item (1) as has been described in the item (4) of the present invention or after the application of a primer coating as set forth in the foregoing item (3) of the present invention.

This coating layer is applied for the elimination of any influence of the surrounding environment on the surface of a steel material and/or for preventing the occurrence of any deterioration of the coating layers applied onto the surface of the steel material due to, for instance, the irradiation with ultraviolet light rays. The additional coated layers may be, for instance, those formed using polyurethane resin- containing paints and/or epoxy type resin-containing paints, which are appropriately selected while taking into consideration the various requests of the surrounding environment.

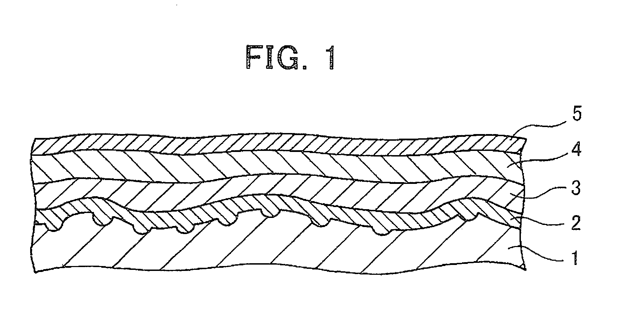

Fig. 1 is a schematic diagram showing the cross sectional structure relating to an embodiment of the steel structure obtained according to the foregoing highly durable repair-coating method of the present invention, observed after the repair-coating operation.

The thick rust layer formed on the surface of a steel material 1 is removed by the surface preparation or conditioning treatment (the step A) and a prior processing solution is applied onto the surface-conditioned plane of the steel material (the step B) to thus form a mixed layer 2 comprising a passive film formed through the treatment with the prior processing solution and the layer of the remaining fixed rust in which the corrosive substances are inactivated or made harmless. Formed on the mixed layer 2 is preferably a coated layer 3 (the step C) of a primer or a zinc powder-containing paint composition such as the highly anticorrosive zinc powder-containing paint composition. More preferably, a coated film 4 of a paint for undercoat and a coated film 5 of a paint for top coating are formed on the primer layer.

### Example

The present invention will be described in more detail with reference to the following Examples.

### Example 1

In respect of the surface preparation treatment in the highly durable repair- coating method of the present invention, the surface preparation treatment carried out using a preferred rotary grinding tool specified in the foregoing item 2 was compared with the conventional surface preparation treatment (secondary keren) carried out using the conventional grinding tool. A weather resistant steel plate having a size of 300mm (height) × 600mm (width) carrying a thick rust layer uniformly generated thereon was herein used as a sample material. A half (corresponding to the width of 300mm) of the sample material was treated using the rotary grinding tool according to the present invention fitted to a commercially available disc grinder to an extent of StD-3, while the remaining half of the sample material was processed to an extent of St-2.0 using a conventional grinding tool comprising a resinoid grinding wheel secured to a commercially available disc sander and the time required for finishing the foregoing treatment was determined in each case.

In this respect, the rotary grinding tool of the present invention is one comprising a metallic rotary panel SUS304 having a diameter of 100mm, provided with projected portions comprising industrial diamond particles having an average particle size of 500µm as the hard particles, which were adhered to the metallic rotary panel through the use of a paste, as the brazing agent (the paste comprised powder of 83% by mass Ni-7% by mass B-4% by mass Si-3% by mass Fe alloy and a polyvinyl alcohol-based organic binder). In this connection, the projected portions were joined, through the vacuum brazing, to the metallic rotary panel by maintaining the assembly at a temperature of 1020°C and under a pressure of 10⁻⁵ Torr for 30 minutes. The surface density of the hard particles on the rotary grinding tool was found to be 100 particles/cm², the average H thereof was found to be 1100µm, the average ratio H/D was found to be 0.6, and the average rate of exposed area thereof was found to be about 60%.

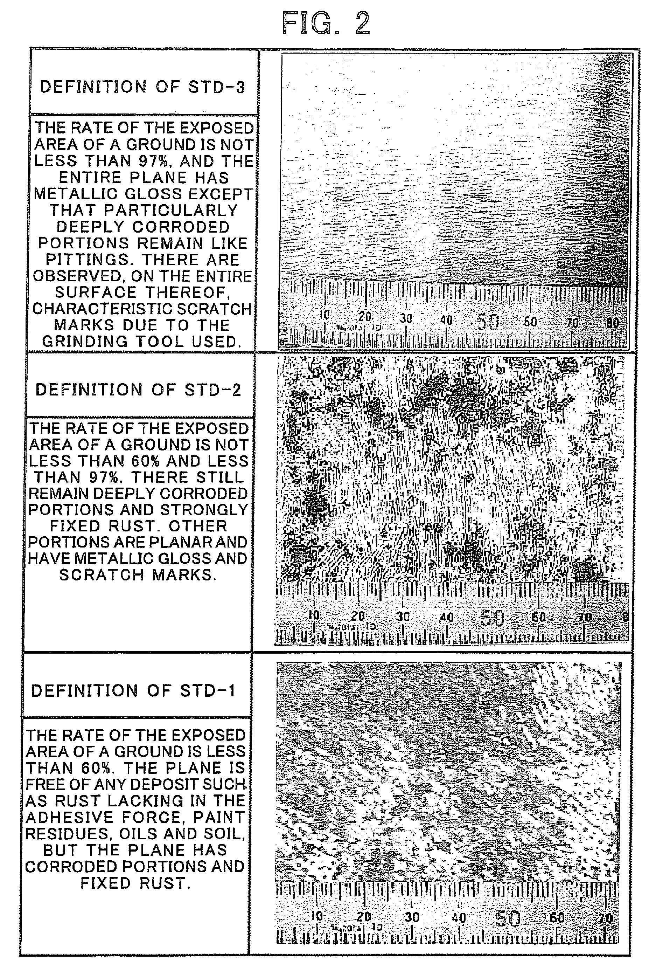

The results thus obtained are summarized in Fig. 2. The processing method using the rotary grinding tool of the present invention could provide a processed plane corresponding to the processing degree of not less than StD-3 within 15 minutes, while the processing method using the conventional grinding tool could not provide any processed plane of St-2 corresponding to the rate of exposed area of the steel material of not less than 60% even after 45 minute from the initiation of the treatment. This clearly indicates that the engineering (processing) method as set forth in the foregoing item (2) is a quite effective repair-coating treatment. In this respect, however, when using the conventional grinding tool, a desired rate of exposed area of the steel material could be obtained by replacing the grindstone and further continuing the grinding operation.

### Example 2

The plane processed according to the repair-coating method of the present invention which included the steps starting from the surface preparation treatment (step A) to the primer-application (the step C) and that processed by the conventional method comprising the same steps were inspected for the anticorrosive properties and the results thus obtained were compared with one another. Rusty steel plates used as the specimens were prepared by spraying them with a salt solution having a concentration of 5% four times at a frequency of one time/week. In this example, such a specimen was subjected to a surface preparation treatment using the same rotary grinding tool of the present invention used in Example 1 to thus give a plane of StD-2, a 100g/L aqueous sodium carbonate solution was applied onto the plane and a highly anticorrosive zinc powder-containing paint composition was then applied thereto. On the other hand, in Comparative Example 1, such a specimen was subjected to a surface preparation treatment according to the blasting method as a conventional method to thus give a plane of Sa-2.5 (corresponding to the rate of exposed area of the steel material of not less than 60%), washed with water to remove the remaining salt component and an organic zinc-rich primer was then applied onto the plane, while in Comparative Example 2, a steel plate specimen was treated by repeating the same procedures used in Comparative Example 1 except for omitting the water-washing step. Then, these specimens were subjected to the following accelerated corrosion test which comprised the steps of making crosscuts on the coated planes of the specimens, and spraying them with a 0.5% aqueous NaCl solution at a frequency of once a week (1 time/week) in a room in the shade over 42 days from the initiation of the test. The results thus obtained are summarized in Table 1. As will be seen from the data listed in Table 1, there were observed the generation of rust along the crosscut line on the specimens at a narrow width for the sample treated according to the present invention up to the step of the application of the highly anticorrosive zinc powder-containing paint composition and the sample (Comparative Example 1) treated according to the conventional method up to the application of the organic zinc-rich primer of the c-coating system, while the sample of Comparative Example 2, which was treated according to Comparative Example 1 except for omitting the water-washing step underwent the generation of linear rust along the crosscut portion and the generation of spot-like corroded sites on areas other than the crosscut portions. These results clearly demonstrate that the method of the present invention, which permits the elimination of the blasting and water-washing steps, is a repair-coating method excellent in the anticorrosive properties, equal to or rather superior to those accomplished by the optimum conventional method (Comparative Example 1) which comprises the blasting and water-washing steps.

**Table 1: Comparison of Qualities of Repair-Coating Methods of the Invention and of Conventional methods**

| Grouping | Ex. of the Invention | Comp. Ex. 1 (Opt. Conv. Meth.) | Comp. Ex. 2 (Com. Used Conv.) |
|---|---|---|---|
| Surface Preparation | StD-2 | Sa-2.5 | Sa-2.5 |
| Prior Processing | Appln. Of 100g/L aq. Soln. of Na₂CO₃ | Reducing the amount of the remaining adhered salt to a level of 60mg/m² with water-washing. | Free of any water-washing step; Amt. of Adhered salt: 150 mg/m²_{.} |
| Interval | One day | One day | One day |
| Primer | Highly anticorrosive Zn powder-containing paint composition: 75 µ m | Commercially available organic zinc-rich primer: 75 µ m | Commercially available organic zinc-rich primer: 75 µ m |

| Spraying with 0.5% NaCl Soln. (freq. of once a week), allowing to stand in the shade | | | |
|---|---|---|---|
| After 2 days | Generation of slight spot-like rust at the crosscut portion of the specimen | Generation of spot-like rust at the crosscut portions of the specimen | Generation of continuous rust at the crosscut portions of the specimen |
| After 7 days | Ditto | Generation of continuous rust at the crosscut portions of the specimen | Generation of continuous rust and liquid rust at the crosscut portions of the specimen |
| After 14 days | Ditto | Ditto | Ditto |
| After 42 days | Ditto | Ditto | Generation of a lot of spot-like rust even at the portions other than the crosscut |

### Example 3

Anticorrosive low alloy steel materials such as weather resistant steel materials, each carrying a thick rust layer were processed according to the conventional optimum and usual repair-coating methods and to the highly durable repair-coating method of the present invention and the repair-coating effects observed for these methods were compared with one another. As the rotary grinding tool whose grinding plane was at least partially provided with hard particles having a Mohs' hardness of higher than 9 connected thereto, there were herein used the aforementioned electrically-powered rotary tool provided with diamond particles and an electrically-powered rotary tool provided with cubic boron nitride particles. To compare the surface preparation treatments, there were also used the blasting method which made use of a commercially available electrically-powered rotary tool provided with resinoid grindstone and silica sand No. 4. In this respect, the rotary grinding tool carrying connected hard particles having a Mohs' hardness of higher than 9 according to the present invention comprised a metallic rotary panel SUS304 having a diameter of 100mm, provided with projected portions comprising industrial diamond particles having an average particle size of 500 to 600 µ m (the treatments g to k, and n of the invention (Inv. g to k, and n)) or cubic boron nitride particles (the treatment p of the invention (Inv. p)) as the hard particles, which were adhered to the metallic rotary panel through the use of a paste, as the brazing agent (the paste comprising powder of 83% by mass Ni-7% by mass B-4% by mass Si-3% by
mass Fe alloy and a polyvinyl alcohol-based organic binder). In this connection, the projected portions were joined, through the vacuum brazing, to the metallic rotary panel by maintaining the assembly at a temperature of 1020°C and under a reduced pressure of 10⁻⁵ Torr for 30 minutes. The projected portions on the grinding plane of the resulting rotary grinding tool have an average H ranging from 900 to 1200 µ m, an average ratio: H/D ranging from 0.3 to 0.7, and an average rate of exposed surface area ranging from 20 to 70% for the treatment of the present invention (Inv. g to k, and n); and an average H of 900µm, an average ratio: H/D of 0.3, and an average rate of exposed surface area of the hard particles of 30% for the treatment of the present invention (Inv. p). The primers used herein were a highly anticorrosive zinc powder-containing paint and a commercially available organic zinc-rich primer as a comparative primer. In either of these cases, the film thickness of each primer layer was set at 75µm. In this connection, the highly anticorrosive zinc powder-containing paint of the present invention used in these experiments was prepared by blending 400 parts by mass of an ethyl silicate solution in xylene as a solvent (Ethyl Silicate 40 having a solid content of 25%, available from CORCOAT Company) as a binder resin, 500 parts by mass of zinc powder (average particle size: 5 µ m, available from HONJO Chemical Co., Ltd.), 40 parts by mass of hydrocalumite (available from TOHO Pigment Co., Ltd.; a sulfite type hydrocalumite), and 20 parts by mass of xylene as a solvent and then stirring these component to thus give a desired paint. A variety of commercially available paint compositions were used for primary coats, intermediate coats and top coats and the thicknesses of these layers are specified in the following Tables 2 and 3 (continued from Table 2). The details of the processing methods are summarized in Tables 2 and 3. The repair-coating was evaluated according to the following methods

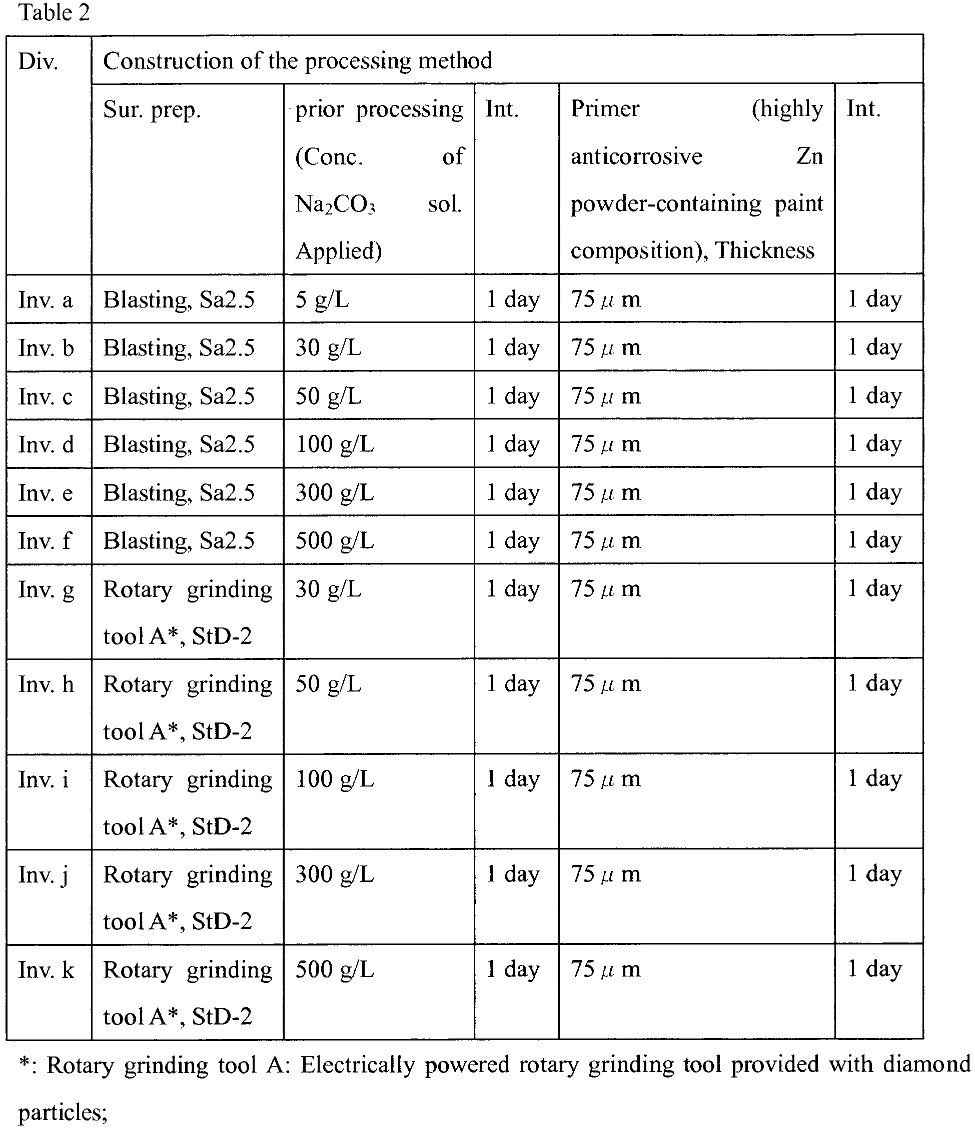

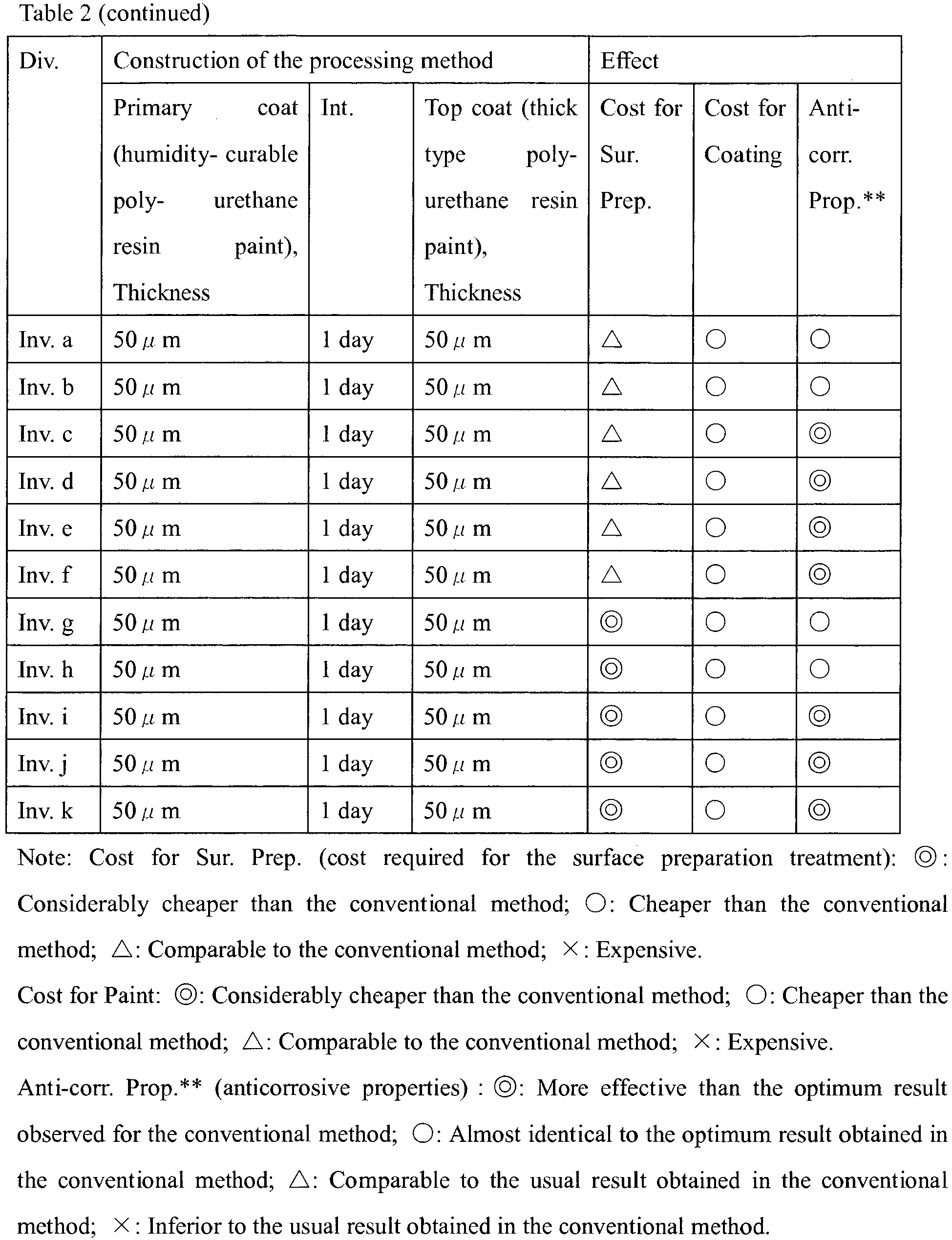

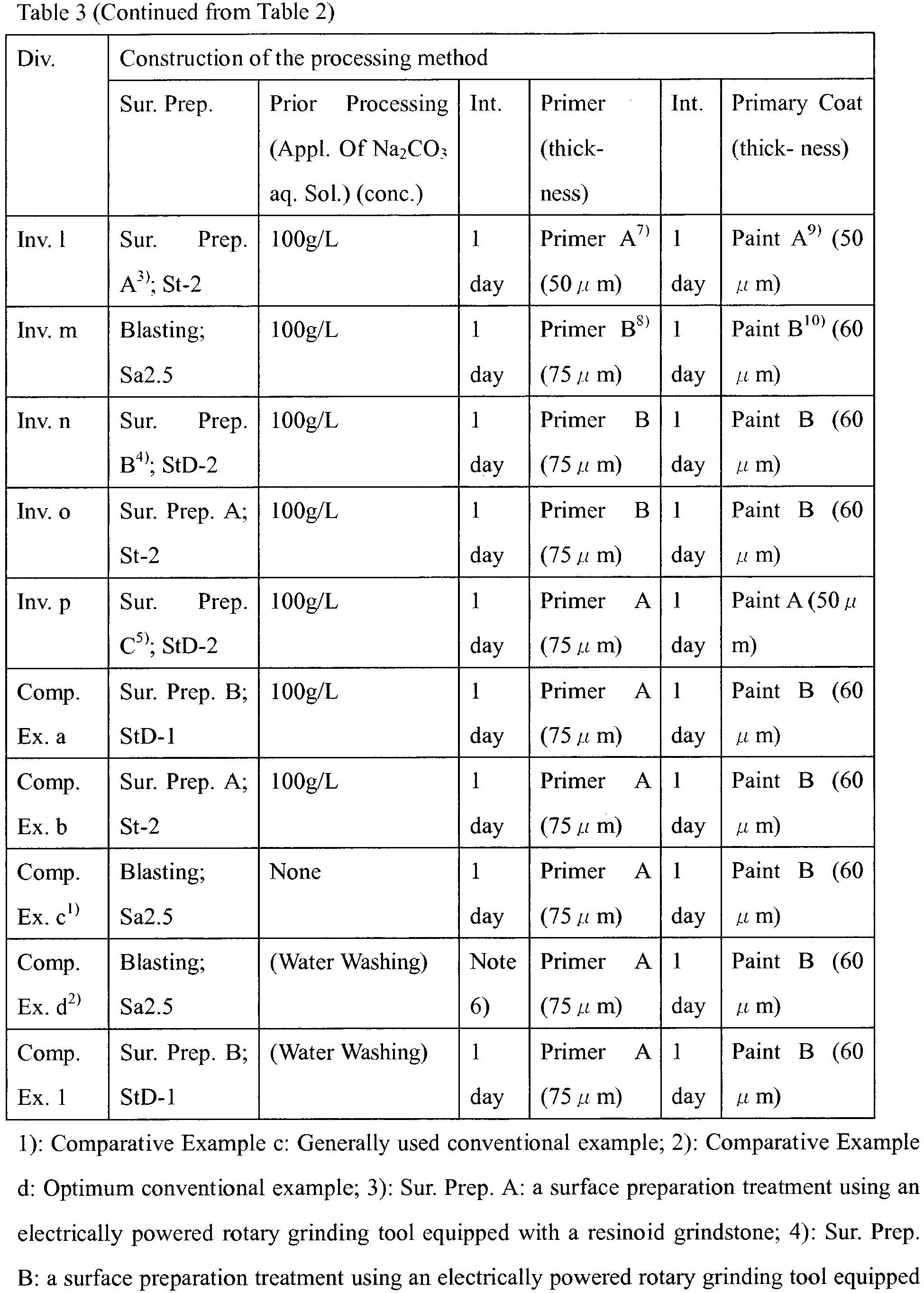

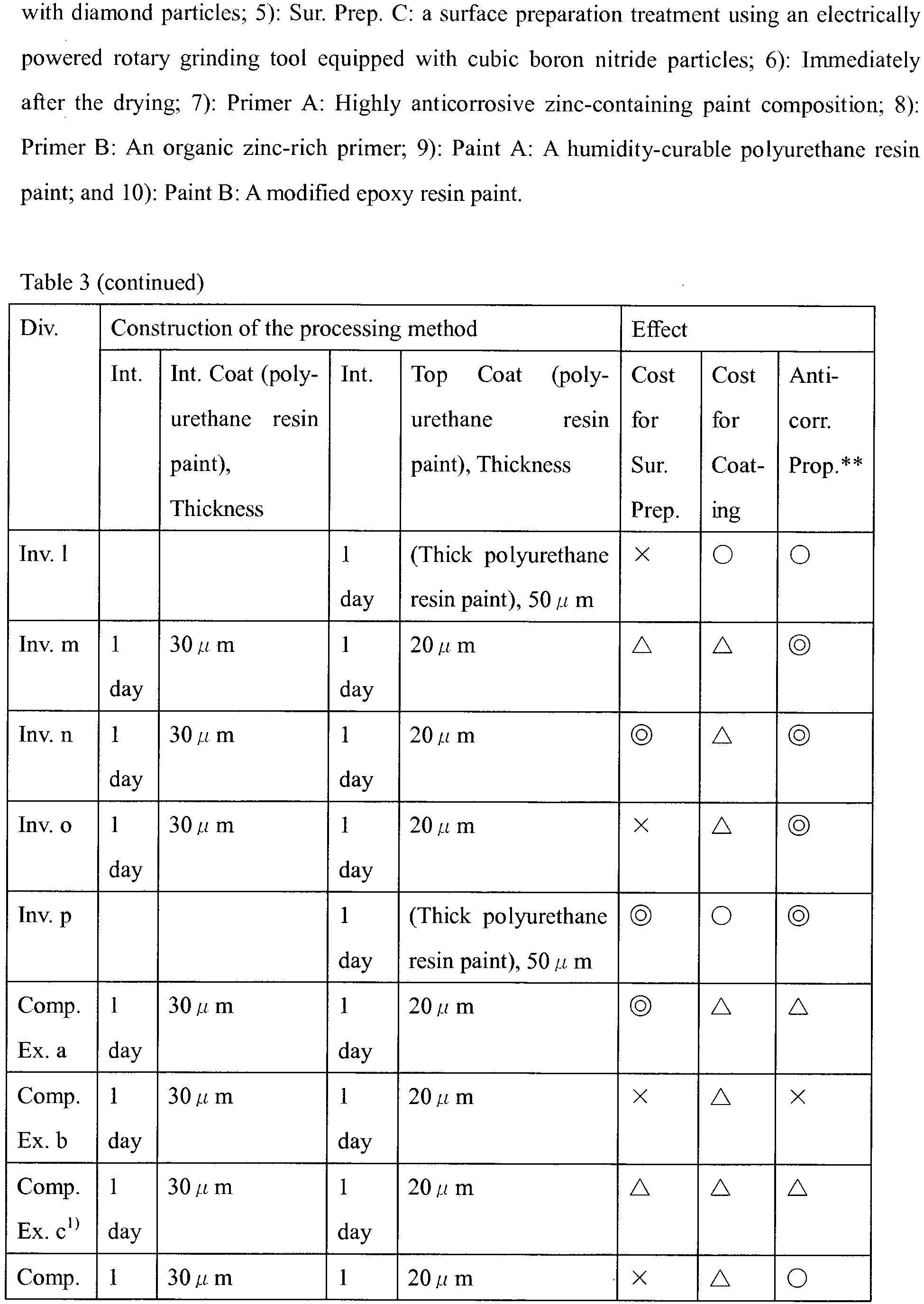

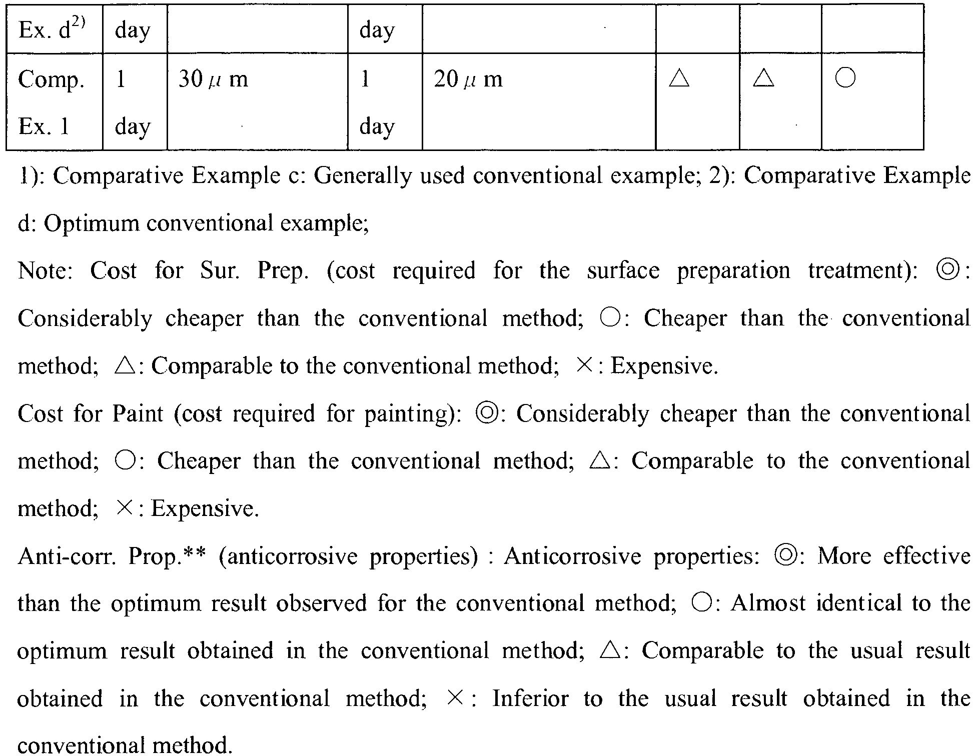

In the foregoing Tables, the symbols "St-2", "Sa2.5", "StD-1" and "StD-2" appearing in the column entitled "Sur. Prep." (surface preparation or surface- conditioning treatment) are as follows:
"St-2": This means that the rate of exposed area of the ground is equal to 50%;
"Sa2.5": This means that the rate of exposed area of the ground is equal to 60%;
"StD-1": This means that the rate of exposed area of the ground is less than 60%;
"StD-2": This means that the rate of exposed area of the ground is not less than 60% and less than 97%.

The cost required for the surface preparation treatment was evaluated according to the following criteria, while collectively taking, into account, the cost required for the tools and
devices needed for carrying out the surface preparation treatment as well as the labor cost accompanied by the operation time: ⊚: Considerably cheaper than the conventional method; ○: Cheaper than the conventional method; Δ: Comparable to the conventional method; × : Expensive. Moreover, the cost required for paint means the cost required for coating per unit area and it was evaluated according to the following criteria, while collectively taking, into account, the kind, construction and amount of each specific paint as well as the cost required for the coating operations: ⊚: Considerably cheaper than the conventional method; ○: Cheaper than the conventional method; Δ: Comparable to the conventional method; × : Expensive. In addition, the same tests as shown in Table 3 were carried out for the determination of the anticorrosive effect and the results obtained were evaluated according to the following criteria: ⊚ : More effective than the optimum result observed for the conventional method; ○: Almost identical to the optimum result obtained in the conventional method; Δ: Comparable to the usual result obtained in the conventional method; × : Inferior to the usual result obtained in the conventional method. The results thus obtained are summarized in the foregoing Tables 2 and 3. As will be clear from the data listed in Tables 2 and 3, the method of the present invention is excellent in the cost required for the surface preparation treatment as compared with the results obtained in Comparative Examples. The cost for coating may greatly be dependent upon whether the intermediate coat can be omitted or not. For instance, it should be noted that the use of the highly anticorrosive zinc powder-containing paint composition alone may be unfavorable with respect to the cost as compared with the use of the conventional zinc-rich primer, but the disadvantage concerning the cost can be eliminated from the collective standpoint by appropriately devising or selecting the coating system to be additionally applied onto the primer. Regarding the anticorrosive effect, the use of the method according to the present invention can ensure the achievement of an overall effect equal to or superior to that achieved by the conventional method which has presently been considered to be optimum. The results obtained in a series of Examples discussed above clearly indicate that the highly durable repair-coating method of the present invention is more economical and reduced environmental load (or the reduced risk of causing environmental pollution) as compared with the conventional method and that it likewise permits the achievement of the anticorrosive effect equal to or superior to that achieved by the conventional method which has been considered to be an optimum repair-coating method.

### Brief Description of the Invention

Fig. 1 is a schematic diagram showing the cross sectional structure relating to an embodiment of the steel structure obtained according to the method of the present invention, observed after the repair-coating operation.
Fig. 2 is a diagram showing the standard for the evaluation of the rate of the exposed area of the ground on the steel material surface obtained after the surface-conditioning using a rotary grinding tool preferably used in the present invention.

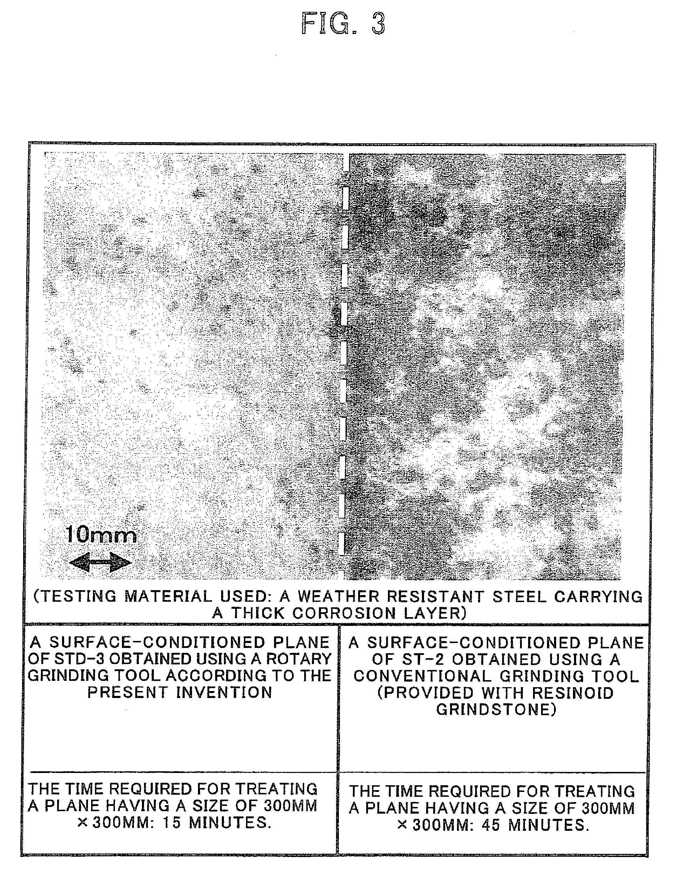

Fig. 3 is a diagram showing the surface conditioned planes obtained using a rotary grinding tool preferably used in the present invention and a conventional grinding tool (provided with a resinoid grindstone) for the sake of comparison.
Fig. 4 is a perspective view showing an example of the rotary grinding tool preferably used in the present invention.
Fig. 5 is a schematic diagram showing the construction of the projected portions of the rotary grinding tool shown in Fig. 4, wherein (a) is a cross sectional view thereof and (b) is a plan view thereof.
Fig. 6 is a diagram showing the shape of the metallic rotary panel of the substrate as a member of the rotary grinding tool shown in Fig. 4, wherein (a) is a plan view thereof and (b) is a cross sectional view taken along the line A-A in Fig. 6(a).

### Brief Description of Symbols

1 • • • steel material; 2 • • • layer containing, in a mixed in condition, a passive film formed from a prior processing solution and the remaining fixed rust whose corrosive substances are inactivated or made harmless; 3 • • • coated layer of highly anticorrosive zinc powder-containing paint composition; 4 • • • primer coat layer; 5 • • • top coat layer; 11 • • • rotary tool; 11' • • • metallic rotary panel (substrate or base material of rotary grinding tool); 12, 12' • • • plane to be ground; 13, 1,3' • • • plane of grinding panel; 14, 14' • • • grinding peripheral plane; 15 • • • projected portion; 16, 16' • • • fitting portion; 17 • • • hard particle; 17a • • • hard particle (exposed portion); 17b • • • hard particle (embedded portion); 18 • • • approximate virtual circle circumscribing the hard particles; 19 • • • brazing agent; a, b • • • bottom of concave portion; c • • • tip of projected portion; 1 • • • line segment passing through the tip of projected portion.

## Claims

1. A method for highly durable repair-coating of a coated or coating-free steel structure comprising the steps of:
A. conditioning the ground of the coated or coating-free steel structure to such an extent that the rate of exposed surface area of the ground is not less than 60%; and
B. applying an aqueous solution of sodium carbonate having a concentration of not less than 5 g/L and not more than 500 g/L, as a prior or preliminary processing solution.

2. The method as set forth in claim 1, wherein the ground-conditioning operation in the step A is carried out using a rotary grinding tool which consists of a metallic rotating panel comprising a central fixing portion for fitting the same to the rotating shaft of a rotary driving system and a grinding plane composed of a grinding plane and a grinding peripheral plane, wherein a part or the whole surface of the metallic rotating panel is provided with hard particles having a Mohs hardness of higher than 9 brazed thereto in a surface density of not less than 20 particles/cm², wherein assuming that the height and diameter of each projected portion formed from the hard particle and the brazing material are defined as H and D, respectively, the average H is not less than 300 µ m and the average ratio: H/D is not less than 0.3, and wherein when calculating the rate of exposed area of the hard particles projected and exposed through the surface of the brazing material, while using a virtual circle circumscribing the hard particles of the projections, the average rate of exposed area is not less than 10%.

3. The method as set forth in claim 1 or 2, further comprising the step C of applying a highly anticorrosive zinc powder-containing paint composition which comprises (A) 100 parts by mass of a binder resin (the solid content by mass); (B) 200 to 800 parts by mass of zinc powder; (C) 1 to 95 parts by mass of a corrosive ion-fixing agent; and (D) 200 to 1,000 parts by mass of a solvent, after the completion of the foregoing step B.

4. The method as set forth in any one of claims 1 to 3, wherein at least one coated layer is applied to the surface of the steel structure after the completion of the foregoing step B or C.

5. The method as set forth in claim 3, wherein the component (A) is an inorganic resin or an organic resin.

6. The method as set forth in claim 5, wherein the inorganic resin as the component (A) is an aqueous dispersion of a partial hydrolyzate of an alkyl silicate or a water-soluble silicate represented by the general formula: R₂O • nSi02 (in the formula, R represents an alkali metal and n is a positive number ranging from 1.0 to 4.5) and colloidal silica.

7. The method as set forth in claim 5, wherein the organic resin as the component (A) is a member selected from the group consisting of epoxy resins, acrylic resins and urethane resins.

8. The method as set forth in claim 3, wherein the component (C) is hydrocalumite or hydrotalcite.

9. The method as set forth in claim 3, wherein the highly anticorrosive zinc powder-containing paint composition further comprises (E) a coupling agent.

## Patentansprüche

1. Verfahren zum sehr dauerhaften Reparaturbeschichten einer beschichteten oder unbeschichteten Stahlstruktur, umfassend die Schritte:
A. Konditionieren des Untergrundes der beschichteten oder unbeschichteten Stahlstruktur in einem solchen Maße, dass der Anteil des freiliegenden Oberflächenbereichs des Untergrundes nicht weniger als 60 % beträgt; und
B. Aufbringen einer wässrigen Lösung von Natriumcarbonat mit einer Konzentration von nicht weniger als 5 g/l und nicht mehr als 500 g/l als eine Lösung zur vorherigen oder vorbereitenden Bearbeitung.

2. Verfahren nach Anspruch 1, wobei der den Untergrund konditionierende Arbeitsgang in Schritt A unter Benutzung eines Rotationsschleifwerkzeugs durchgeführt wird, das aus einer metallischen Rotationsscheibe besteht, die einen zentralen Befestigungsabschnitt zu deren Anbringung an der Rotationswelle eines Rotationsantriebssystems sowie eine Schleifebene umfasst, die sich aus einer Schleifebene und einer Umfangsschleifebene zusammensetzt, wobei ein Teil oder die gesamte Oberfläche der metallischen Rotationsscheibe mit Hartpartikeln mit einer Härte nach Mohs von größer als 9 versehen ist, die mit einer Oberflächendichte von nicht weniger als 20 Teilchen/cm² darauf gelötet sind, wobei unter der Annahme, dass die Höhe und der Durchmesser jedes hervorstehenden Abschnitts, der von den Hartpartikeln und dem Lötmaterial gebildet wird, als H bzw. D definiert sind, und das durchschnittliche H nicht weniger als 300 µm und das durchschnittliche Verhältnis H/D nicht weniger als 0,3 beträgt, und wobei, wenn der Anteil an freiliegendem Oberflächenbereich der Harzpartikel, der aus der Oberfläche des Lötmaterials hervorsteht und freiliegt, unter Benutzung eines virtuellen Kreises, der die Hartpartikel der hervorstehenden Teile umschreibt, berechnet wird, der durchschnittliche Anteil an freiliegendem Bereich nicht weniger als 10 % beträgt.

3. Verfahren nach Anspruch 1 oder 2, ferner umfassend Schritt C des Aufbringens einer in hohem Maße vor Korrosion schützenden, Zinkpulver enthaltenden Anstrichzusammensetzung, die (A) 100 Masseteile eines Bindeharzes (massebezogener Feststoffgehalt); (B) 200 bis 800 Masseteile Zinkpulver; (C) 1 bis 95 Masseteile eines korrosive Ionen fixierenden Mittels; und (D) 200 bis 1.000 Masseteile eines Lösemittels umfasst, nach der Beendigung des vorhergehenden Schrittes B.

4. Verfahren nach einem der Ansprüche 1 bis 3, wobei nach der Beendigung des vorhergehenden Schrittes B oder C mindestens eine Auftragsschicht auf die Oberfläche der Stahlstruktur aufgebracht wird.

5. Verfahren nach Anspruch 3, wobei die Komponente (A) ein anorganisches Harz oder ein organisches Harz ist.

6. Verfahren nach Anspruch 5, wobei das anorganische Harz als die Komponente (A) eine wässrige Dispersion eines Teilhydrolysats eines Alkylsilicats oder ein wasserlösliches Silicat, das durch die allgemeine Formel R₂O · nSi02 (in der Formel steht R für ein Alkalimetall, und n ist eine positive Zahl im Bereich von 1,0 bis 4,5) dargestellt wird, und kolloidales Siliciumdioxid ist.

7. Verfahren nach Anspruch 5, wobei das organische Harz als die Komponente (A) ein Element ist, das aus der Gruppe ausgewählt wird, die aus Epoxidharzen, Acrylharzen und Urethanharzen besteht.

8. Verfahren nach Anspruch 3, wobei die Komponente (C) Hydrocalumit oder Hydrotalkit ist.

9. Verfahren nach Anspruch 3, wobei die in hohem Maße vor Korrosion schützende, Zinkpulver enthaltende Anstrichzusammensetzung ferner (E) als Haftvermittler umfasst.

## Revendications

1. Procédé pour appliquer un revêtement de réparation très durable sur une structure en acier avec ou sans revêtement, comportant les étapes consistant à :
A. préparer le fond de la structure en acier avec ou sans revêtement dans une mesure telle que la proportion de surface découverte du fond ne soit pas inférieure à 60 % ; et
B. appliquer une solution aqueuse de carbonate de sodium, à une concentration non inférieure à 5 g/L et non supérieure à 500 g/L, en tant de solution de traitement préalable ou préliminaire.

2. Procédé selon la revendication 1, dans lequel l'opération de préparation du fond lors de l'étape A est effectuée à l'aide d'un outil de meulage rotatif qui consiste en un panneau métallique rotatif comprenant une partie centrale de fixation pour installer celui-ci sur l'arbre rotatif d'un système d'entraînement rotatif et un plan de meulage composé d'un plan de meulage et d'un plan de meulage périphérique, une partie ou la totalité de la surface du panneau métallique rotatif étant pourvue de particules dures a dureté Mohs de plus de 9 fixées à celle-ci par brasage avec une densité en surface non inférieure à 20 particules/cm², dans lequel, en supposant que la hauteur et le diamètre de chaque partie projetée constituée de la particule dure et de la brasure sont respectivement désignés par H et D, H n'est en moyenne pas inférieur à 300 µm et le rapport H/D moyen n'est pas inférieur à 0,3, et dans lequel, lorsqu'on calcule la proportion de surface découverte des particules projetées et découvertes à travers la surface de la brasure, en utilisant un cercle virtuel englobant les particules dures des projections, la proportion moyenne de surface découverte n'est pas inférieure à 10 %.

3. Procédé selon la revendication 1 ou 2, comportant en outre, au terme de l'étape B précitée, l'étape C consistant à appliquer une composition hautement anticorrosive de peinture contenant de la poudre de zinc, qui contient (A) 100 parties en poids d'un liant sous forme de résine (la teneur en solide en poids) ; (B) 200 à 800 parties en poids de poudre de zinc ; (C) 1 à 95 parties en poids d'un agent de fixation des ions corrosifs ; et (D) 200 à 1000 parties en poids d'un solvant.

4. Procédé selon l'une quelconque des revendications 1 à 3, dans lequel au moins une couche de revêtement est appliquée sur la surface de la structure en acier au terme de l'étape B ou C précitée.

5. Procédé selon la revendication 3, dans lequel le constituant (A) est une résine minérale ou une résine organique.

6. Procédé selon la revendication 5, dans lequel la résine minérale servant de constituant (A) est une dispersion aqueuse d'un hydrolysat partiel d'un silicate d'alkyle ou d'un silicate hydrosoluble désigné par la formule générale R₂O · nSi02 (dans la formule, R représente un métal alcalin et n est un nombre positif de 1,0 à 4,5) et de silice colloïdale.

7. Procédé selon la revendication 5, dans lequel la résine organique servant de constituant (A) est un élément choisi parmi les résines époxy, les résines acryliques et les résines uréthanes.

8. Procédé selon la revendication 3, dans lequel le constituant (C) est de l'hydrocalumite ou de l'hydrocalcite.

9. Procédé selon la revendication 3, dans lequel la composition hautement anticorrosive de peinture contenant de la poudre de zinc contient en outre (E) un agent adhésif.
